(19) Europäisches Patentamt / European Patent Office / Office européen des brevets

(11) **EP 3 262 111 B1**

(12) **EUROPEAN PATENT SPECIFICATION**

(45) Date of publication and mention of the grant of the patent:
**17.06.2020 Bulletin 2020/25**

(21) Application number: **16755996.2**

(22) Date of filing: **26.02.2016**

(51) Int Cl.:
**C08L 9/00** (2006.01)          **C08K 3/36** (2006.01)
**C08K 5/101** (2006.01)

(86) International application number:
**PCT/TH2016/000014**

(87) International publication number:
**WO 2016/137407 (01.09.2016 Gazette 2016/35)**

(54) **OIL-EXTENDED RUBBER, RUBBER COMPOSITION, AND METHOD FOR MANUFACTURING THE OIL-EXTENDED RUBBER**

ÖLGESTRECKTER KAUTSCHUK, KAUTSCHUKZUSAMMENSETZUNG UND VERFAHREN ZUR HERSTELLUNG DES ÖLGESTRECKTEN KAUTSCHUKS

CAOUTCHOUC ALLONGÉ À L'HUILE, COMPOSITION DE CAOUTCHOUC ET PROCÉDÉ DE FABRICATION DU CAOUTCHOUC ALLONGÉ À L'HUILE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.02.2015 TH 1501001097**

(43) Date of publication of application:
**03.01.2018 Bulletin 2018/01**

(73) Proprietor: **Thai Synthetic Rubbers Co., Ltd.**
**Bangkok 10500 (TH)**

(72) Inventors:
• **CHANSORN, Thawat**
  **Bangkok 10500 (TH)**
• **PUVANATVATTANA, Toemphong**
  **Bangkok 10500 (TH)**
• **ONSANGJUN, Kiatisak**
  **Bangkok 10500 (TH)**

(74) Representative: **Patentanwälte Bauer Vorberg Kayser**
**Partnerschaft mbB**
**Goltsteinstraße 87**
**50968 Köln (DE)**

(56) References cited:
**EP-A1- 2 028 022        JP-A- 2003 231 668**
**JP-A- 2003 231 668     JP-A- 2009 046 674**
**JP-A- 2009 242 777     JP-A- 2015 067 827**
**JP-A- 2015 101 712     US-A1- 2011 115 166**

• **DICK-HEAN CHOONG ET AL.: 'Characterization and Properties of Vegetable Oil-Extended Natural Rubber' 14TH POLYMER MATERIAL FORUM ABSTRACTS 01 November 2005, JAPAN, page 119, XP009505501**

**Description**

Technical Field

The present invention generally relates to an oil-extended rubber and a method for manufacturing the oil-extended rubber. The present invention also relates to a rubber composition, and a tire or a shoe sole containing the rubber composition.

Background Art

There have been extensive researches for improving the physical properties of rubber compositions. Examples of such researches include the ones described in such patent documents as US2009/0176910, JP4335557, WO2008044722, KR2011073060, US2012/0065324, US2008/0097023, US2011/0112215, and EP2072280. However, further studies for achieving the highest possible properties are still going on.

Objects of the Invention and Solution

The object of this invention is to provide an oil-extended rubber and a rubber composition which show improved physical properties and a rubber composition containing the oil-extended rubber, which can be applied to rubber industry or tires industry or shoe sole industry containing the rubber composition. This object is solved by the rubber in accordance with claim 1, the rubber composition in accordance with claim 9 and a method in accordance with claim 12.

The present inventors have unexpectedly found that the use of coconut oils with specific prescription can allow the rubber compositions containing the same to improve such physical properties as abrasion resistance, and elastic properties including rebound and compression set.

A tire may comprise the rubber composition according to claim 9.

A shoe sole may comprise the rubber composition according to claim 9.

Brief Description of drawing

Figure 1 shows an example of the result of measurements on Payne Effect.
Figure 2 shows an example of the result of measurements on processability.
Figure 3 shows an example of the result of measurements on processability.
Figure 4 shows another example of the result of measurements on processability.
Figure 5 shows another example of the result of measurements on processability.

Description of Embodiments

As described above, an oil-extended rubber according
contains a vulcanizable rubber component and a coconut oil with a free fatty acid content of 5 to 18 % by mass or more.

Any vulcanizable rubber component can be used for the oil-extended rubber. Examples of the vulcanizable rubbers include polybutadiene and their derivatives. 1,4-cis-polybutadiene is preferably employed. Styrene-butadiene rubber (SBR) and Natural rubber (NR) can also be preferably employed.

For instance, the vulcanizable rubber can be a polybutadiene rubber having the following properties:
The Mooney viscosity (ML1+4, 100°C) is preferably in the range of 29-90, and more preferably 40-85 and is further more preferably in the range of 43-80. A larger Mooney viscosity than the above range may deteriorate the mixing processability while a smaller one than the above range may lower the abrasion resistance undesirably and cold flow problem.

The molecular weight distribution [Weight average molecular weight (Mw)/Number average molecular weight (Mn)] is in the range of 1.8-4.5, and more preferably in the range of
2.0-3.0. A larger molecular weight distribution than the above range may lower the abrasion resistance, while a smaller one than the above range may deteriorate the roll mill processability undesirably.

The weight average molecular weight (Mw) is preferably in the range of 400,000-1,200,000, and more preferably in the range of 500,000-1,000,000 and is further more preferably in the range of 550,000-850,000. A larger one than the above range may lower the roll mill processability, while a smaller one than the above range may lower the abrasion resistance undesirably.

The number average molecular weight (Mn) is preferably in the range of 120,000-600,000, and more preferably in the range of 150,000-500,000 and is further more preferably in the range of 200,000-400,000. A larger one than the above range may lower the roll mill processability, while a smaller one than the above range may lower the abrasion resistance undesirably.

The velocity dependence index (n-value) of the Mooney viscosity is in the range of 2.0-3.0, preferably in the range of 2.4-2.9, and more preferably in the range of 2.4-2.8. A smaller n-value than 2.3 worsens the ability incorporated into compound of filler, while a large one than 3.0 lower the rebound resilience undesirably.

The n-value index is determined from the degree of branching and the molecular weight distribution in the polybutadiene and is not correlated with the Mooney viscosity. A larger degree of branching or molecular weight distribution of the polybutadiene increases the n-value index, while a smaller degree of branching or molecular weight distribution decreases the n-value index.

The range of the n-value may be operated and changed in the following two stages because it is required to optimize the molecular weight distribution. First, in a butadiene polymerization stage, polybutadienes of several types with smaller n-values and different molecular weights are polymerized. Next, the polybutadienes of several types with different molecular weights are blended to widen the molecular weight distribution to adjust the n-value index of polybutadiene within an appropriate range. The n-value index in the polymerization stage can be adjusted with a mixed molar ratio of an organoaluminum compound serving as co-catalyst to water. In a word, an increased amount of water added to a certain amount of the organoaluminum compound reduces the mixed molar ratio, and as the mixed molar ratio becomes smaller, the n-value tends to become smaller. The mixed molar ratio of the organoaluminum compound serving as co-catalyst to water in the polymerizing stage is preferably 2.0 or lower, and particularly preferably 1.0-1.8. A mixed molar ratio of 2.0 or higher makes the n-value index too large while a mixed molar ratio lower than 1.0 may extremely lower the polymerization activity undesirably.

The 5% toluene solution viscosity (Tcp) and the Mooney viscosity (ML) have a ratio (Tcp/ML), which is preferably in the range of 2.0-4.0, and more preferably in the range of 2.5-3.0.

A larger Tcp/ML ratio than the above range increases the cold flow property of a rubber while a smaller one than the above range lowers the abrasion resistance undesirably.

The cis-1,4 content is preferably 95% or higher, more preferably 97% or higher, and particularly preferably 98% or higher. A lower cis-1,4 content than the above deteriorates the abrasion resistance undesirably.

The above polybutadiene can be produced in the presence of a cobalt-based catalyst. An example of the cobalt-based catalyst composition includes (A) a cobalt compound, (B) a halogen-containing organoaluminum compound, and (C) water.

The cobalt compound preferably employs salts and complexes of cobalt. Particularly preferable examples include cobalt salts such as cobalt chloride, cobalt bromide, cobalt nitrate, cobalt octylate (ethylhexanoate), cobalt naphthenate, cobalt acetate, and cobalt malonate; cobalt bisacetyl acetonate, and cobalt trisacetyl acetonate; acetoacetic acid ethyl ester cobalt; an organic basic complex such as a pyridine complex or picoline complex of a cobalt salt; and an ethyl alcohol complex.

Examples of the halogen-containing organoaluminum include trialkyl aluminum or dialkyl aluminum chloride, dialkyl aluminum bromide, alkyl aluminum sesquichloride, alkyl aluminum sesquibromide, and alkyl aluminum dichloride.

Examples of specific compounds include trialkyl aluminum such as trimethyl aluminum, triethyl aluminum, triisobutyl aluminum, trihexyl aluminum, trioctyl aluminum, and tridecyl aluminum.

Examples of the halogen-containing organoaluminum further include organoaluminum halides such as dialkyl aluminum chlorides such as dimethyl aluminum chloride and diethyl aluminum chloride, sesquiethyl aluminum chloride, and ethyl aluminum dichloride; and hydrogenated organoaluminum compound such as diethyl aluminum hydride, diisobutyl aluminum hydride, and sesquiethyl aluminum hydride. The organoaluminum compounds may be used in combination of two or more.

The molar ratio (B)/(A) between the component (A) and the component (B) is preferably 0.1-5000, and more preferably 1-2000.

The molar ratio (B)/(C) between the component (B) and the component (C) is preferably 0.7-5, more preferably 0.8-4, and particularly preferably 1-3.

Other than the butadiene monomer, they may contain a small amount of: conjugated dienes such as isoprene, 1,3-pentadiene, 2-ethyl-1,3-butadiene, 2,3-dimethylbutadiene, 2-methylpentadiene, 4-methylpentadiene, and 2,4-hexadiene; non-cyclic monoolefins such as ethylene, propylene, butene-1, butene-2, isobutene, pentene-1, 4-methylpentene-1, hexene-1, and octene-1; cyclic monoolefins such as cyclopentene, cyclohexene, and norbornene; and/or aromatic vinyl compounds such as styrene, and α-methylstyrene; and non-conjugated diolefins such as dicyclopentadiene, 5-ethylidene-2-norbornene, and 1,5-hexadiene.

Polymerization methods are not limited particularly. For example, bulk polymerization using a conjugated diene compound monomer such as 1,3-butadiene as a polymerization solvent, and solution polymerization may be applicable. Examples of the solvent in the solution polymerization include aromatic hydrocarbons such as toluene, benzene, and xylene; aliphatic hydrocarbons such as n-hexane, butane, heptane, and pentane; alicyclic hydrocarbons such as cyclopentane, and cyclohexane; olefin-based hydrocarbons such as the above olefin compounds, cis-2-butene, and trans-2-butene; hydrocarbon-based solvents such as mineral spirit, solvent naphtha, and kerosene; and halogenated hydrocarbon-based solvents such as methylene chloride.

Among the solvents above, toluene, cyclohexane, and a mixture of cis-2-butene with trans-2-butene are employed suitably.

Polymerization temperatures preferably fall within a range between -30°C and 150°C, and particularly preferably within a range between 30°C and 100°C. Polymerization periods of time preferably fall within a range between one minute and 12 hours, and particularly preferably within a range between five minutes and five hours.

After polymerization for a certain period of time, the inside of the polymerization vessel is depressurized if required, and then post treatments such as steps of cleaning and drying are taken.

The coconut oil used for the oil-extended rubber has a free fatty acid content of 5 to 18% by mass. The free fatty acid content is herein defined as a value measured by the test method according to AOAC (2012) 940.28. More specifically, each coconut oil sample is measured at room temperature. In this method, 5.0 gram of the each oil sample is prepared in Erlenmeyer flask. Then, 25 ml of isopropyl alcohol or ethanol is added and homogeneously mixed with oil sample. After that, 5-6 drops of phenolphthalein is added as a titration indicator. The oil solution is titrated with 0.1N NaOH solution until the color of mixture is changed to pink. The content of Free Fatty Acid (%FFA) is calculated as below:

Calculation

$$\%\text{FFA} = \frac{A \times B \times C}{D} \times 100$$

wherein:

A = Titrated volume of NaOH solution (ml)
B = Concentration of NaOH solution (mol/liter)
C = Molecular weight of fatty acid (g/mol)
D = Weight of oil sample (g)

The present inventors have found that employing coconut oils having a free fatty acid content of 5 to 18% by mass can improve the physical properties of the rubber composition. As will be described in detail below, it has been found that the use of coconut oils having a free fatty acid content of 5 to 18% by mass in the rubber makes it possible to attain well balanced physical properties of the rubber composition.

The free fatty acid content is 5 to 18% by mass When these are the cases, better balanced physical properties of the rubber composition can be attained.

Also, the free fatty acid content preferably is 5 to 9% by mass. Such conditions will improve physical properties of the rubber.

The iodine value of the coconut oil is arbitrary. However, it is preferable that the iodine value of the coconut oil is set as 10 or more. When this is the case, physical properties of the rubber composition can be improved further. Iodine value is herein defined as a value measured by the test method according to AOAC (2012) 993.20. More specifically, each coconut oil sample is measured at room temperature. 3.0 gram of the each oil sample is prepared in 500 ml Erlenmeyer flask (at least 2 blank determinations to run with each sample group are to be prepared as well). Then, 15 ml of cyclohexane-acetic acid solvent is added and completely dissolved with each oil sample. Then, Wijs solution is dispensed into flask containing test sample flask, stopper flask, and swirl to mix. Immediately timer is set for half an hour and flask is stored in dark at 25°C±5°C for duration of reaction. Then, sample flask is removed from dark environment. Then, 20 ml KI solution is added into sample flask and mixed. 150 ml of $H_2O$ is added and the sample is gradually titrated with 0.1 mol/L standard $Na_2S_2O_3$ solution with constant and vigorous shaking or mechanical stirring. Titrating is continued until yellow color of the sample has almost disappeared. 1-2 ml of starch indicator solution is added to flask and titrating is continued until blue color has just disappeared. Iodine value (IV) is calculated as below:

Calculation

$$\text{Iodine value (IV)} = \frac{(B - S) \times M \times 12.69}{W}$$

wherein:

B = Titration of blank (ml)
S = Titration of test sample (ml)
M = Molarity of $Na_2S_2O_3$ solution
W = Weight of oil sample (g)

The content of the coconut oil is ranging from 21.5 to 37.5 phr. When these are the cases, viscosity of the oil-extended rubber can be optimized, making the productivity of the oil-extended rubber and the rubber composition become higher, and physical properties of the rubber composition can be improved and optimized further.

The coconut oil with a free fatty acid content of 5 to 18% by mass can be obtained as a crude coconut oil. Alternatively, such coconut oil can be obtained by refining a crude coconut oil and adding fatty acid such as lauric acid thereto. Also, such coconut oil can be obtained by heating up the crude oil, letting it cool down, separating it into clear part (refined coconut oil) and opaque part (oil with higher amount of fatty acids). When the crude oil is used, the cost for the oil-extended rubber or the rubber composition could be lower. When the refined oil with additional fatty acid or the oil obtained as the opaque part as described above is used, the physical properties of coconut oil and the oil-extended rubber or the rubber composition could be more stable. Refinement of the crude oil described above can be done either chemically or physically.

The oil-extended rubber can be manufactured, for example, by mixing a vulcanizable rubber component and a coconut oil with a free fatty acid content of 5 to 18% by mass.

The oil-extended rubber can be obtained by a solid-phase synthesis. Namely, the mixing step as described above can be performed without adding solvents. For example, the oil-extended rubber can be obtained as follows. Firstly, diene rubber is masticated by mixing equipment such as banbury mixer, kneader, two roll mills, or extruder (single screw or twin screw) around 1 minute at 90°C or less. Then, coconut oil is added with required amount of free fatty acid in masticated rubber for 3 minutes for well dispersion. In this way, coconut oil-extended polybutadiene rubber can be produced.

The oil-extended rubber can also be obtained by a liquid-phase synthesis. For example, the oil-extended rubber can be manufactured by (1) dissolving the vulcanizable rubber component in a solvent prior to performing the mixing step, and (2) using the dissolved vulcanizable rubber component in the mixing step. This method would make the mass production easier compared to the solid-phase synthesis as described earlier. Examples of the solvent for dissolving the vulcanizable rubber component include aliphatic alkanes such as n-hexane, cycloalkanes such as cyclohexane, and aromatic solvents such as toluene, benzene, and styrene. Among these solvents, cycloalkanes such as cyclohexane are most preferably employed as the solvent.

For example, the oil-extended rubber can be obtained by a liquid-phase synthesis as following procedure. 100 gram of 1,4-cis-polybutadiene rubber is dissolved in cyclohexane for 2-4 hours at room temperature. Coconut oil with required amount of free fatty acid is added into rubber solution. Coconut oil is homogenously mixed in rubber solution within 30 minutes. Coconut oil-extended polybutadiene rubber solution is dried in vacuum oven for 1 hour at 100 °C. In this way, coconut oil-extended polybutadiene rubber can be produced.

Furthermore, the oil-extended rubber can also be obtained by after 1,4-cis-polybutadiene rubber polymerization in the presence of a cobalt-based catalyst as mentioned above as in the following procedure. Polybutadiene polymerization is done following required specification of polymer properties such as Mooney Viscosity, Molecular weight, Molecular Weight Distribution (MWD), solution viscosity (T-cp). After the residence time, polymerization reaction is terminated by adding some amounts of water and antioxidant. Then, coconut oil with required amount of free fatty acid is added into rubber solution. Coconut oil is homogenously mixed in rubber solution within 30 minutes before de-solvent and drying process. Coconut oil-extended polybutadiene rubber solution is dried in vacuum oven for 1 hour at 100 °C. In this way, coconut oil-extended polybutadiene rubber can be produced.

A rubber composition contains the oil-extended rubber as described above. Such rubber compositions have been found to show improved physical properties such as abrasion resistance and elastic properties including rebound and compression set. The content of the oil-extended rubber may be ranging from 1 to 100 phr, and preferably from 10 to 80 phr, and more preferably from 30 to 70 phr.

The rubber composition further contains a diene-based rubber other than the vulcanizable rubber. Examples of the diene-based rubber other than the vulcanizable rubber include butadiene rubber, natural rubber, isoprene rubber, styrene butadiene rubber, and a mixture thereof. Other examples thereof include high cis polybutadiene rubber, low cis polybutadiene rubber, emulsion-polymerized styrene butadiene rubber or solution-polymerized styrene butadiene rubber (SBR), ethylene propylene diene rubber (EPDM), nitrile rubber (NBR), butyl rubber (IIR), chloroprene rubber (CR), and mixture thereof. Derivatives of these rubbers, for example, polybutadiene rubbers modified with tin compounds, or the above rubbers epoxy-modified, silane-modified, or maleic acid-modified may also be used solely or in combination of two or more. The content of the diene-based rubber other than the vulcanizable rubber may be ranging from 1 to 100 phr, and preferably from 10 to 80 phr, and more preferably from 30 to 70 phr.

The rubber composition further contains a rubber reinforcing agent. Examples of the rubber reinforcing agent include silica, carbon black, and a mixture thereof. Other examples thereof include inorganic reinforcing agents such as various types of carbon black and white carbon, carbon nanotube, clay, talcum, activated calcium carbonate, and ultrafine magnesium silicate; and organic reinforcing agents such as polyethylene resin, polypropylene resin, high styrene resin, phenol resin, lignin, modified melamine resin, cumarone indene resin, and petroleum resin. Particularly preferable examples include carbon black having a particle diameter of 90 nm or below and an amount of dibutyl phthalate (DBP) oil absorption number of 70 ml/100 g or more, for example, FEF, FF, GPF, SAF, ISAF, SRF, and HAF. The content of the rubber reinforcing agent may be ranging from 5 to 100 phr, and preferably from 10 to 80 phr, and more preferably from 25 to 75 phr. The rubber reinforcing agent most preferably contains silica and/or carbon black.

The rubber composition may further contain compounding ingredients kneaded therein, such as a vulcanizing agent, a vulcanization accelerator, an anti-oxidant, a filler, a rubber process oil, zinc oxide, and a stearic acid, if required, as generally used in the rubber industrial field.

Examples of the vulcanizing agent include publicly known vulcanizing agents, for example, sulfur, organic peroxides, resinous vulcanizing agents, and metal oxides such as a magnesium oxide.

Examples of the vulcanization accelerator include publicly known vulcanization accelerators, for example, aldehydes, ammonias, amines, guanidines, thioureas, thiazoles, thiurams, dithiocarbamates, and xanthates.

Examples of the anti-oxidant include amine-ketone series, imidazole series, amine series, phenol series, sulfur series, and phosphorous series.

Examples of the filler include inorganic fillers such as calcium carbonate, basic magnesium carbonate, clay, litharge, diatomsceous earth; and organic fillers such as reclaimed rubber and powdered rubber.

Examples of the rubber process oil include aromatic series, naphthenic series, and paraffinic series, either of which may be used.

The rubber composition can further contain a coconut oil in addition to the one having been already added to the oil-extended rubber. The coconut oil that can be additionally contained in the rubber composition may have a free fatty acid content of 0.05% by mass or more, or that of less than 0.05% by mass. By doing this, for example, the viscosity of the rubber composition can be properly adjusted.

In another embodiment, a rubber composition contains a vulcanizable rubber component, a coconut oil with a free fatty acid content of 0.05% by mass or more, a diene-based rubber other than the vulcanizable rubber, and a rubber reinforcing agent. The rubber composition can further contain compounding ingredients, such as a vulcanizing agent, a vulcanization accelerator, an anti-oxidant, a filler, a rubber process oil, zinc oxide, and a stearic acid, if required, as generally used in the rubber industrial field. The specific examples of these components are the same as described above. Such embodiment can also result in an enhancement in such physical properties as abrasion resistance, and elastic properties including rebound and compression set.

The rubber composition described above can be used for tire application. The tire containing the rubber composition as described above has been found to show excellent performance in such properties as abrasion resistance, wet skid and ice skid resistance, and elastic properties including rebound and compression set.

The rubber composition described above can also be used for a shoe sole application. The shoe sole containing the rubber composition as described above has been found to show excellent performance in such properties as abrasion resistance, wet skid resistance, and elastic properties including rebound and compression set.

Examples

1. Preparation of coconut oil-extended polybutadiene rubber

The oil-extended rubber was obtained by a liquid-phase synthesis as follows. 100 gram of 1,4-cis-polybutadiene rubber was dissolved in cyclohexane for 2-4 hours at room temperature. Coconut oil with required amount of free fatty acid was added into rubber solution. Coconut oil was homogenously mixed in rubber solution within 30 minutes. Coconut oil-extended polybutadiene rubber solution was dried in vacuum oven for 1 hour at 100 °C. In this way, coconut oil-extended polybutadiene rubber was produced.

2. Preparation of rubber composition

2-1. Non-Productive Mixing (Primary Compound)

During the non-productive mixing, all components except the vulcanizing agent and accelerators were mixed in the standard mixer such as a banbury mixer with initial temperature at 90 °C within 6 minutes mixing time. Firstly, all of mixtures of diene polymers were mixed in banbury mixer for 30 seconds. Then, half of filler especially silica and silane coupling agent were added in to mixer. At 1 minute and 30 seconds of mixing process, another half of filler and other rubber compound ingredients were added into mixer. Then, 2 minutes and 30 seconds later, ram of mixer chamber was opened up for cleaning residue filler trapped in the chamber. The mixing process had proceeded for 6 minutes. When mixing temperature reached 145 °C, the rotor speed of mixer had been reduced. The mixed compounds were rolled at preferred temperature range of 55-65 °C using a two roll mill mixer where distance to grind was set to 2 millimeters. The samples of the compound sheets obtained as above were subject to the Mooney viscosity measurement.

2-2. Productive Mixing (Secondary Compound)

The sheets of the primary compounds obtained from the aforementioned non-productive mixing were then subject to the mixing with vulcanizing agent, most preferably sulfur, and the vulcanizing accelerators by using two standard roller at preferred temperature range of 55-65 °C within 4 minutes. The rubber compounds from the productive mixing (secondary compound) have been pulled in sheets and the samples were then subject to the measurements of Mooney viscosity (ML1+4,100 °C), curing time on a Moving Die Rheometer (MDR) at 160 °C.

3. Vulcanization and Properties of the Filler-Filled Vulcanizates

The secondary filler-filled rubber compounds obtained from the productive mixing were processed in the mold pressing at 160 °C according the curing time observed by a MDR as already mentioned. The rubber vulcanizates in various forms of the specimens were then subject to the measurements of the viscoelastic property during the temperature sweep, tensile strength, hardness, specific gravity, tear resistance, rebound resilience, abrasion resistance, and compression set.

The viscoelastic property during the temperature sweep of the vulcanizates specimens can directly relate to the results of the dynamic storage modulus E', the dynamic loss modulus (E") and the ratio of dynamic storage modulus and loss modulus, E"/E' ( (tan delta). Generally, at low temperature region, the elastomeric or rubber materials with excellent viscoelastic property suitable for the application in tire treads should show the lower modulus at minus temperature (at higher than glass transition temperature), indicating the rubber state of the materials during being used at the snowing or icing environment, and the higher tan delta at minus temperature (at higher than glass transition temperature), indicating the better wet traction property during being used at the snowing or icing environment. Furthermore, the lower tan delta at high temperature (above room temperature) is preferred for the rubber materials with excellent viscoelastic property used in tire treads as this indicates the lower degree of hysteresis loss, hence the lower rolling resistance and lower fuel consumption.

4. Characterization Methods

(a) Microstructure of rubbers

Microstructure measurements were performed by FT-IR spectroscopy on a SHIMADZU-IRPrestige-21 using the standard KBR film and $CS_2$ solution methods.

(b) Molecular weight and molecular weight distribution of rubbers

Molecular weight and molecular weight distribution measurements were performed by Gel Permeation Chromatography (GPC) on SHIMADZU-CTO-20A GPC with two Shodex GPC KF-805L columns run in series at 40 °C column temperature in THF.

(c) Mooney Viscosity

Mooney viscosity (ML1+4, at 100 °C) measurement was performed in accordance with ASTM D1646 standard.

(d) Cure time of vulcanization

Cure time of vulcanization was determined from the time at 90 percent cured state of rubber compound (t 90), which was measured by Moving Die Rheometer (MDR) on an Alpha Technologies MDR2000 at 160 °C, constant frequency of 1.667 Hz and 0.5 degree of arc for torsional shear in accordance with ASTM D5289 standard. To be more specific, the following values were measured:

Min T (ML) = Minimum torque (unit dN.m)
Ts1 = Scorch time (unit min), time required for the increasing of 1 unit of torque from Minimum Torque. This number is an indication of the time required for the beginning of the process of crosslinking
Tc(10) = the time to 10 percent of torque increase or time corresponding to 10 percent curing of vulcanization
Max T (MH) = Maximum torque (unit dN.m)

(e) Viscoelastic property of rubber vulcanizates:

Dynamic temperature sweep analysis was performed on an EPLEXOR QC 25 (GABO, Germany) between -80 and 100 °C in tension mode at a constant frequency of 10 Hz, 1.0 % static strain and 0.1 % dynamic strain, heating rate 2 °C/minute.

(f) Abrasion resistance property of rubber vulcanizates:

Abrasion resistance was measured on the akron abrasion resistance machine according to the BS903 standard with standard weight 61b. and sample angle of 15°.

(g) DIN Abrasion resistance property of rubber vulcanizates:

DIN Abrasion resistance measurement was performed in accordance with DIN:51536 standard.

(h) Rebound resilience property of rubber vulcanizates

Rebound resilience measurement was performed in accordance with BS903 standard part 22.

(i) Tensile property of rubber vulcanizates

Tensile measurement was performed in accordance with ASTM D412 standard with standard die cutter type C.

(j) Tear resistance property of rubber vulcanizates

Tear resistance measurement was performed in accordance with ASTM D624 standard.

(k) Hardness property of rubber vulcanizates:

Hardness measurement was performed in accordance with ASTM D2240 standard(shore A type).

(1) Compression set property of rubber vulcanizates

Compression set measurement was performed in accordance with ASTM D395.

5. Experiments

5-1. The effects of using specific oil-extended rubbers on various physical properties

5-1-1. Preparation and evaluation of oil-extended rubbers

The 1,4-cis-polybutadiene rubber used for the preparation is BR150L with Mooney viscosity of 52 as specified in Table 1 below as "P1." The oil-extended rubbers P2, P3, P4, P5 and P6 were synthesized according to the method described above. Moreover, the oil-extended rubber with paraffinic oil (P7) was also prepared for comparison. The specification and Mooney viscosity of these polymers are summarized in Table 1 below.

Table 1

| Polymer | | P1 | P2 | P3 | P4 | P5 | P6 | P7 |
|---|---|---|---|---|---|---|---|---|
| Oil | Type | - | Cocunut Oil | Cocunut Oil | Cocunut Oil | Cocunut Oil | Cocunut Oil | Parafinic oil |
| | Cocunut Oil FFA% | - | 7% | 7% | 7% | 2% | 2% | - |
| | Iodine value (wijs) | NA | 10.5 | 10.5 | 10.5 | 10.6 | 10.6 | NA |
| | Content | - | 21.5 phr | 30 phr | 40 phr | 21.5 phr | 30 phr | 37.5 phr |
| Mooney viscosity | $ML_{1+4}$,100°C | 52 | 30.2 | 24.6 | 20.7 | 29.2 | 24.0 | 35 |

5-1-2. Preparation and evaluation of the rubber composition before vulcanization (secondary compound)

The secondary compounds were prepared according to the method described above and the recipe described in Table 2 below. In Table 2, Si69 means (Bis[3-(triethoxysilyl)propyl]tetrasulfide), St Acid means Stearic Acid, and AO.6C means (N-(1,3-Dimethylbutyl)-N'-phenyl-p-phenylenediamine).

Table 2

| components | phr |
|---|---|
| S-SBR 1205 | 70 |
| Oil-extended rubber | 30 |
| Silica (VN3) powder | 75 |
| Si69 | 6 |
| Added oil | see Table 3 |
| ZnO | 3 |
| St Acid | 1 |
| AO.6C | 1 |

The specifications and physical properties of the secondary compounds are summarized in Table 3 below.

Table 3

| Compound No. | | | C1 (Ref) | C2 | C3 | C4 | C5 | C6 | C7 (Ref) | C8 | C9 |
|---|---|---|---|---|---|---|---|---|---|---|---|
| Polymer | | | P1 | P6 | P5 | P3 | P2 | P4 | P7 | P5 | P2 |
| Additional Oil | Type | | Sunthene 4240 | Coconut FFA 2% | Coconut FFA 2% | Coconut FFA 7% | Coconut FFA 7% | Coconut FFA 7% | Sunthene 4240 | Sunthene 4240 | Sunthene 4240 |
| | Iodine value (wijs) | | NA | 10.6 | 10.6 | 10.5 | 10.5 | 10.5 | NA | NA | NA |
| | phr | | 21.5 | 12.38 | 15 | 12.38 | 15 | 9.5 | 10.17 | 15 | 15 |
| Mooney viscosity; 1st | ML$_{1+4}$,100°C | | 68.5 | 62.4 | 61.8 | 55.3 | 52.9 | 58.9 | 75.2 | 76.4 | 72 |
| Mooney viscosity; 2nd | ML$_{1+4}$,100°C | | 60 | 45.2 | 44.2 | 40.6 | 39.2 | 43.1 | 58.3 | 59 | 55.7 |
| Curing rate (160 °C) | Min. T | (dN·m) | 1.8 | 1.5 | 1.5 | 1.1 | 1.0 | 1.2 | 1.9 | 2.0 | 1.8 |
| | Max. T | (dN·m) | 20.7 | 21.8 | 21.9 | 22.4 | 22.3 | 21.7 | 20.5 | 19.8 | 20.4 |
| | Ts1 | min. | 1.2 | 1.3 | 1.2 | 1.5 | 1.5 | 2.0 | 0.5 | 1.4 | 1.4 |
| | Tc (10) | min. | 2.4 | 3.1 | 2.6 | 3.3 | 3.4 | 3.4 | 2.2 | 2.4 | 3.0 |
| | Tc (90) | min. | 7.56 | 7.51 | 7.35 | 8.16 | 8.41 | 7.51 | 7.24 | 7.1 | 7.3 |

5-1-3. Vulcanization and evaluation of the vulcanizates

The vulcanization was conducted according to the method described above and the recipe described in Table 4 below. In Table 4, CBS means (N-cyclohexyl-2-benzothiazole sulfenamide) and DPG means (Diphenylguanidine).

Table 4

| components | phr |
|---|---|
| CBS | 1.7 |
| DPG | 2 |
| Sulfur | 1.4 |

The physical properties of the vulcanizates are summarized in Table 5 below.

Table 5

| Compound No. | | | C1 (Ref) | C2 | C3 | C4 | C5 | C6 | C7 (Ref) | C8 | C9 |
|---|---|---|---|---|---|---|---|---|---|---|---|
| Hardness | Type A | | 76 | 74 | 74 | 74 | 74 | 74 | 75 | 76 | 76 |
| Specific Gravity | | - | 1.188 | 1.186 | 1.188 | 1.187 | 1.187 | 1.187 | 1.181 | 1.186 | 1.186 |
| 100% Modulus | | kg/cm$^2$ | 32 | 30 | 30 | 31 | 31 | 31 | 30 | 33 | 33 |
| 200% Modulus | | kg/cm$^2$ | 62 | 58 | 58 | 62 | 60 | 61 | 60 | 65 | 65 |
| 300% Modulus | | kg/cm$^2$ | 98 | 93 | 93 | 100 | 98 | 99 | 95 | 104 | 103 |
| Tensile strength | | kg/cm$^2$ | 143 | 152 | 149 | 155 | 149 | 152 | 148 | 142 | 140 |
| Elongation | | % | 433 | 457 | 453 | 441 | 430 | 440 | 449 | 397 | 397 |
| Tear resistance | | kg/cm | 57 | 59 | 57 | 59 | 59 | 59 | 58 | 60 | 61 |
| Rebound | BS | % | 40.9 | 43.8 | 42.9 | 44.3 | 44.3 | 44.3 | 41.4 | 42.9 | 42.9 |
| Index vs Sunthene | | | 100.0 | 107.1 | 104.9 | 108.3 | 108.3 | 108.3 | 101.2 | 104.8 | 104.8 |
| Akron Abrasion | | cc loss | 0.058 | 0.045 | 0.043 | 0.040 | 0.039 | 0.040 | 0.056 | 0.049 | 0.052 |
| Index vs Sunthene | | | 100.0 | 128.9 | 134.9 | 145.0 | 148.7 | 145.0 | 103.6 | 118.4 | 111.5 |
| DIN Abrasion | | cc loss | 116 | 115 | 117 | 120 | 125 | 121 | 126 | N/A | N/A |
| Index vs Sunthene | | | 100.0 | 100.9 | 99.1 | 96.7 | 92.8 | 95.9 | 92.1 | N/A | N/A |
| **Viscoelasticity** | | | | | | | | | | | |
| **-20°C** | | | | | | | | | | | |
| E' | | MPa | 89.22 | 129.12 | 144.44 | 133.25 | 128.41 | 132.33 | 84.83 | 85.0 | 90.6 |
| E" | | MPa | 9.66 | 16.62 | 17.94 | 16.78 | 16.19 | 16.42 | 8.79 | 10.4 | 10.4 |
| E* | | MPa | 89.74 | 130.19 | 145.55 | 134.31 | 129.43 | 133.35 | 85.28 | 85.7 | 91.2 |
| tand | | | 0.108 | 0.129 | 0.124 | 0.126 | 0.126 | 0.124 | 0.104 | 0.123 | 0.115 |
| Index vs Sunthene | | | 100 | 119 | 115 | 116 | 117 | 115 | 96 | 113 | 106 |
| 0°C | | | | | | | | | | | |
| E' | | MPa | 68.80 | 81.78 | 91.77 | 83.06 | 84.60 | 87.02 | 67.88 | 61.8 | 68.7 |
| E" | | MPa | 7.40 | 11.12 | 12.17 | 10.93 | 10.87 | 11.23 | 6.47 | 7.2 | 7.8 |
| E* | | MPa | 69.20 | 82.53 | 92.57 | 83.78 | 85.29 | 87.74 | 68.19 | 62.2 | 69.2 |
| tand | | | 0.108 | 0.136 | 0.133 | 0.132 | 0.129 | 0.129 | 0.095 | 0.116 | 0.114 |
| Index vs Sunthene | | | 100 | 126 | 123 | 122 | 119 | 120 | 89 | 108 | 106 |

(continued)

| 60°C | | | | | | | | | | |
|---|---|---|---|---|---|---|---|---|---|---|
| E' | MPa | 41.53 | 34.00 | 37.40 | 33.17 | 34.99 | 35.71 | 42.58 | 35.8 | 37.2 |
| E" | MPa | 5.16 | 4.87 | 5.47 | 5.05 | 5.11 | 5.04 | 5.02 | 4.4 | 4.7 |
| E* | MPa | 41.85 | 34.35 | 37.79 | 33.56 | 35.36 | 36.06 | 42.87 | 36.1 | 37.5 |
| tand | | 0.124 | 0.143 | 0.146 | 0.152 | 0.146 | 0.141 | 0.118 | 0.124 | 0.127 |
| Index vs Sunthene | | 100 | 87 | 85 | 82 | 85 | 88 | 105 | 100 | 98 |

As shown in Table 5, the physical properties are generally improved by employing coconut-oil extended rubbers.

5-2. The effects of adding specific coconut oils on various physical properties

5-2-1. Preparation and evaluation of the rubber composition before vulcanization (secondary compound)

The vulcanizable rubber used for the preparation is BR150L whose properties are summarized in Table 6 below.

Table 6

| Name | | BR150L |
|---|---|---|
| Mooney viscosity | $ML_{1+4}$,100°C | 44.4 |
| T-cp | (cps) | 108.6 |
| Cis content | (%) | 98.41 |

The secondary compounds were prepared according to the method described above and the recipe described in Table 7 below.

Table 7

| components | phr |
|---|---|
| S-SBR 1205 | 70 |
| BR150L | 30 |
| Silica (VN3) powder | 75 |
| Si69 | 6 |
| Added oil | See Table 8 |
| ZnO | 3 |
| St Acid | 1 |
| AO.6C | 1 |

The specifications and physical properties of the secondary compounds are summarized in Table 8 below.

Table 8

| Compound No. | | | C10 (Ref) | C11 (Ref) | C13 | C14 | C15 (Ref) | C16 (Ref) | C17 (Ref) | C18 | C19 | C20 (Ref) | C21 (Ref) | C22 (Ref) | C23 | C24 |
|---|---|---|---|---|---|---|---|---|---|---|---|---|---|---|---|---|
| Additional Oil | Type | | Sunthene 4240 | Soy bean | Coconut FFA 7% | Coconut FFA 2% | Sunthene 4240 | Soy bean | Epoxidized Soy bean oil | Coconut FFA 7% | Coconut FFA 2% | Sunthene 4240 | Soy bean | Epoxidized Soy bean oil | Coconut FFA 7% | Coconut FFA 2% |
| | Iodine value (wijs) | | NA | NA | 10.5 | 10.6 | NA | NA | 1.87 | 10.5 | 10.6 | NA | NA | 1.87 | 10.5 | 10.6 |
| | phr | | 21.5 | 21.5 | 21.5 | 21.5 | 15 | 15 | 15 | 15 | 15 | 10 | 10 | 10 | 10 | 10 |
| Mooney viscosity; 1st | $ML_{1+4}$,100°C | | 68.6 | 62.8 | 48.1 | 64.1 | 85.5 | 92.5 | 71.5 | 75.4 | 84.9 | 103.1 | 108.7 | 88 | 123.4 | 112.6 |
| Mooney viscosity; 2nd | $ML_{1+4}$,100°C | | 58.1 | 50.5 | 37.5 | 49 | 72.4 | 67.6 | 65.7 | 57 | 62.6 | 86.2 | 80.4 | 77.5 | 87.4 | 86.5 |
| Curing rate (160 °C) | Min.T | (dN·m) | 1.6 | 2.0 | 1.1 | 3.0 | 2.1 | 2.4 | 2.4 | 1.9 | 2.5 | 2.4 | 2.7 | 2.7 | 3.6 | 2.9 |
| | Max.T | (dN·m) | 20.5 | 18.0 | 23.2 | 22.9 | 22.7 | 21.4 | 18.2 | 26.4 | 25.8 | 25.9 | 24.7 | 22.7 | 31.2 | 26.4 |
| | Ts1 | min. | 1.1 | 1.3 | 1.4 | 1.2 | 0.5 | 0.5 | 0.3 | 1.0 | 0.5 | 0.3 | 0.4 | 0.3 | 0.3 | 0.4 |
| | Tc(10) | min. | 2.3 | 2.2 | 3.3 | 3.0 | 2.3 | 2.0 | 1.1 | 3.0 | 2.4 | 1.6 | 1.5 | 1.2 | 2.2 | 2.1 |
| | Tc(90) | min. | 8.2 | 7.0 | 8.3 | 7.5 | 8.2 | 6.5 | 7.2 | 7.6 | 7.1 | 7.4 | 6.4 | 6.4 | 7.3 | 7.0 |

EP 3 262 111 B1

13

5-2-2. Vulcanization and evaluation of the vulcanizates

The vulcanization was conducted according to the method described above and the recipe described in Table 4 above. The physical properties of the vulcanizates are summarized in Table 9 below.

Table 9

| Compound No. | | | C10 (Ref) | C11 (Ref) | C13 | C14 | C15 (Ref) | C16 (Ref) | C17 (Ref) | C18 | C19 | C20 (Ref) | C21 (Ref) | C22 (Ref) | C23 | C24 |
|---|---|---|---|---|---|---|---|---|---|---|---|---|---|---|---|---|
| Hardness | Type A | | 76-77 | 72-73 | 74-75 | 74-75 | 80-81 | 78-79 | 78-79 | 77-78 | 78-79 | 82-83 | 81-82 | 82-83 | 81-82 | 81-82 |
| Specific Gravity | | - | 1.1879 | 1.1863 | 1.1875 | 1.1878 | 1.199 | 1.200 | 1.208 | 1.198 | 1.197 | 1.208 | 1.208 | 1.215 | 1.224 | 1.208 |
| 100% Modulus | | kg/cm$^2$ | 29 | 23 | 29 | 30 | 34 | 31 | 30 | 34 | 34 | 37 | 37 | 37 | 41 | 40 |
| 200% Modulus | | kg/cm$^2$ | 56 | 40 | 56 | 57 | 68 | 57 | 51 | 66 | 67 | 75 | 72 | 70 | 81 | 81 |
| 300% Modulus | | kg/cm$^2$ | 89 | 63 | 92 | 91 | 111 | 92 | 80 | 106 | 107 | 118 | 114 | 110 | 128 | 132 |
| Tensile strength | | kg/cm$^2$ | 143 | 150 | 150 | 151 | 159 | 158 | 143 | 162 | 158 | 156 | 162 | 164 | 162 | 162 |
| Elongation | | % | 460 | 655 | 468 | 466 | 402 | 490 | 528 | 439 | 426 | 392 | 420 | 450 | 376 | 359 |
| Tear resistance | | kg/cm | 60 | 56 | 56 | 59 | 67 | 61 | 54 | 64 | 65 | 68 | 65 | 61 | 67 | 63 |
| Rebound | BS | % | 40.0 | 37.3 | 42.9 | 42.9 | 39.5 | 38.6 | 34.6 | 41.4 | 42.3 | 38.1 | 39.5 | 35.4 | 37.3 | 41.4 |
| Index vs Sunthene | | | 100 | 93 | 107 | 107 | 99 | 97 | 87 | 104 | 106 | 95 | 99 | 89 | 93 | 104 |
| Akron Abrasion | | cc loss | 0.062 | 0.099 | 0.047 | 0.048 | 0.041 | 0.063 | 0.091 | 0.035 | 0.032 | 0.029 | 0.049 | 0.052 | 0.024 | 0.028 |
| Index vs Sunthene | | | 100 | 63 | 132 | 129 | 151 | 98 | 68 | 177 | 194 | 214 | 127 | 119 | 258 | 221 |
| **Viscoelasticity** | | | | | | | | | | | | | | | | |
| **-20°C** | | | | | | | | | | | | | | | | |
| E' | | MPa | 88.6 | 88.6 | 151.3 | 150.2 | N/A | N/A | N/A | N/A | N/A | N/A | N/A | N/A | N/A | N/A |
| E" | | MPa | 9.7 | 10.7 | 18.2 | 18.8 | N/A | N/A | N/A | N/A | N/A | N/A | N/A | N/A | N/A | N/A |
| E* | | MPa | 89.2 | 89.3 | 152.4 | 151.3 | N/A | N/A | N/A | N/A | N/A | N/A | N/A | N/A | N/A | N/A |
| tand | | | 0.109 | 0.121 | 0.120 | 0.125 | N/A | N/A | N/A | N/A | N/A | N/A | N/A | N/A | N/A | N/A |
| Index vs Sunthene | | | 100 | 111 | 110 | 115 | N/A | N/A | N/A | N/A | N/A | N/A | N/A | N/A | N/A | N/A |
| **0°C** | | | | | | | | | | | | | | | | |
| E' | | MPa | 68.2 | 64.8 | 96.4 | 104.9 | N/A | N/A | N/A | N/A | N/A | N/A | N/A | N/A | N/A | N/A |
| E" | | MPa | 7.4 | 7.6 | 12.3 | 13.8 | N/A | N/A | N/A | N/A | N/A | N/A | N/A | N/A | N/A | N/A |
| E* | | MPa | 68.6 | 65.2 | 97.2 | 105.8 | N/A | N/A | N/A | N/A | N/A | N/A | N/A | N/A | N/A | N/A |
| tand | | | 0.109 | 0.117 | 0.128 | 0.131 | N/A | N/A | N/A | N/A | N/A | N/A | N/A | N/A | N/A | N/A |
| Index vs Sunthene | | | 100 | 107 | 117 | 120 | N/A | N/A | N/A | N/A | N/A | N/A | N/A | N/A | N/A | N/A |

EP 3 262 111 B1

(continued)

| 60°C | | | | | | | | | | | | | | | |
|---|---|---|---|---|---|---|---|---|---|---|---|---|---|---|---|
| E' | MPa | 41.7 | 38.8 | 41.8 | 42.6 | N/A | N/A | N/A | N/A | N/A | N/A | N/A | N/A | N/A | N/A |
| E" | MPa | 5.2 | 5.3 | 5.9 | 5.8 | N/A | N/A | N/A | N/A | N/A | N/A | N/A | N/A | N/A | N/A |
| E* | MPa | 42.0 | 39.1 | 42.2 | 43.0 | N/A | N/A | N/A | N/A | N/A | N/A | N/A | N/A | N/A | N/A |
| tand | | 0.124 | 0.136 | 0.141 | 0.136 | N/A | N/A | N/A | N/A | N/A | N/A | N/A | N/A | N/A | N/A |
| Index vs Sunthene | | 100 | 91 | 88 | 92 | N/A | N/A | N/A | N/A | N/A | N/A | N/A | N/A | N/A | N/A |

As shown in Table 9, the physical properties are generally improved by adding coconut oil as a component.

5-3. The effects of changing FFA content in the coconut oils on various physical properties

5-3-1. Preparation and evaluation of the rubber composition before vulcanization (secondary compound)

The vulcanizable rubber used for the preparation is BR150L whose properties are summarized in Table 6 above. The secondary compounds were prepared according to the method described above and the recipe described in Table 10 below.

Table 10

| components | phr |
| --- | --- |
| S-SBR 1205 | 70 |
| BR150L | 30 |
| Silica (VN3) powder | 75 |
| Si69 | 6 |
| Added oil | 21.5 |
| ZnO | 3 |
| St Acid | 1 |
| AO.6C | 1 |

The specifications and physical properties of the secondary compounds are summarized in Table 11 below. In this Table 11, "Refined coconut oil" had been prepared by refining crude coconut oil, and FFA content of the refined coconut oil is 0.07%.

Refined coconut oil was prepared as follows. That is, the crude coconut oil was heated up for some period of time and was allowed to cool. By doing so, the crude oil was separated into the clear part (edible oil with low melting point; refined coconut oil) and the opaque part (oil with higher amount of fatty acid with high melting point). This clear part was used as the "refined coconut oil."

Also, the oils with "(RF)" mean the oils which are the opaque parts prepared by the refining process as described above which may have been adjusted the amount of free fatty acids in the desired range. On the other hand, the oils without "(RF)" mean that the coconut oil used in the example was a crude coconut oil which may have been adjusted the amount of free fatty acids in the desired range.

Table 11

| Compound No. | | | C25 (Ref) | C26 | C27 | C28 | C29 | C30 | C31 | C32 | C33 | C34 | C35 | C36 | C37 | C38 | C39 |
|---|---|---|---|---|---|---|---|---|---|---|---|---|---|---|---|---|---|
| Additional Oil | Type | | Sunthene4240 | Refined coconut oil | FFA3% | FFA5% | FFA5% (RF) | FFA7% | FFA7% (RF) | FFA9% | FFA15% | FFA15% (RF) | FFA20% | FFA30% | FFA40% | FFA50% | FFA80% |
| | Iodine value (wijs) | | NA | 10.1 | 10.6 | NA | NA | 10.5 | NA | NA | 18.7 | NA | NA | NA | NA | NA | NA |
| | phr | | 21.5 | 21.5 | 21.5 | 21.5 | 21.5 | 21.5 | 21.5 | 21.5 | 21.5 | 21.5 | 21.5 | 21.5 | 21.5 | 21.5 | 21.5 |
| Mooney viscosity; 1st | $ML_{1+4}$, 100°C | | 63.8 | 54 | 49.2 | 46.3 | 47.5 | 44.6 | 44.6 | 43.9 | 40.3 | 39.9 | 38.3 | 40.8 | 43 | 52.6 | 78.1 |
| Mooney viscosity; 2nd | $ML_{1+4}$, 100°C | | 54.8 | 44.1 | 40.3 | 37.7 | 39.8 | 36.8 | 36.6 | 35.8 | 33.7 | 33.2 | 32.1 | 34.3 | 37.9 | 44.9 | 63.0 |
| Curing rate (160 °C) | Min. T | (dN·m) | 1.6 | 1.5 | 1.3 | 1.1 | 1.1 | 1.0 | 1.0 | 0.9 | 0.8 | 0.8 | 0.8 | 0.9 | 1.0 | 1.1 | 1.5 |
| | Max. T | (dN·m) | 18.4 | 19.7 | 20.0 | 20.0 | 19.8 | 20.2 | 20.1 | 20.0 | 20.0 | 20.0 | 19.9 | 20.0 | 19.5 | 18.5 | 15.8 |
| | Ts1 | min. | 1.2 | 0.5 | 1.2 | 1.3 | 1.3 | 1.4 | 1.5 | 2.1 | 2.5 | 2.5 | 2.5 | 2.5 | 2.5 | 2.4 | 2.0 |
| | Tc (10) | min. | 2.3 | 2.2 | 2.5 | 3.1 | 3.1 | 3.1 | 3.2 | 3.3 | 3.5 | 3.5 | 3.5 | 3.4 | 3.2 | 3.1 | 2.1 |
| | Tc (90) | min. | 8.11 | 8.00 | 8.07 | 8.24 | 8.08 | 8.03 | 8.30 | 8.17 | 8.12 | 8.17 | 8.01 | 7.40 | 7.06 | 6.28 | 5.13 |

5-3-2. Vulcanization and evaluation of the vulcanizates

The vulcanization was conducted according to the method described above and the recipe described in Table 4 above. The physical properties of the vulcanizates are summarized in Table 12 below.

Table 12

| Compound No. | | | C25 (Ref) | C26 | C27 | C28 | C29 | C30 | C31 | C32 | C33 | C34 | C35 | C36 | C37 | C38 | C39 |
|---|---|---|---|---|---|---|---|---|---|---|---|---|---|---|---|---|---|
| Hardness | Type A | | 76 | 76 | 74-75 | 74-75 | 75 | 75 | 74 | 74-75 | 76 | 76 | 77 | 77 | 78 | 79 | 80 |
| Specific Gravity | | - | 1.187 | 1.188 | 1.188 | 1.187 | 1.188 | 1.188 | 1.188 | 1.189 | 1.189 | 1.188 | 1.190 | 1.189 | 1.190 | 1.190 | 1.194 |
| 100% Modulus | | ka/cm$^2$ | 32 | 30 | 31 | 31 | 31 | 31 | 31 | 32 | 37 | 36 | 39 | 41 | 40 | 40 | 39 |
| 200% Modulus | | ka/cm$^2$ | 62 | 57 | 59 | 59 | 60 | 60 | 60 | 62 | 71 | 70 | 76 | 79 | 75 | 74 | 67 |
| 300% Modulus | | ka/cm$^2$ | 99 | 91 | 95 | 95 | 97 | 98 | 97 | 101 | 113 | 112 | 119 | 120 | 114 | 111 | 100 |
| Tensile strength | | ka/cm$^2$ | 155 | 153 | 148 | 148 | 150 | 154 | 150 | 153 | 146 | 157 | 147 | 149 | 160 | 161 | 187 |
| Elongation | | % | 437 | 464 | 434 | 435 | 437 | 438 | 434 | 432 | 375 | 402 | 367 | 348 | 418 | 435 | 555 |
| Tear resistance | | kg/cm | 60 | 59 | 56 | 58 | 59 | 60 | 59 | 55 | 62 | 60 | 57 | 62 | 59 | 66 | 62 |
| Rebound | BS | % | 40.3 | 42.9 | 41.4 | 44.3 | 42.3 | 43.8 | 42.9 | 43.8 | 42.9 | 42.9 | 41.4 | 41.4 | 39.5 | 37.3 | 32.0 |
| Index vs Sunthene | | | 100.0 | 106.4 | 102.8 | 110.0 | 105.0 | 108.6 | 106.4 | 108.6 | 106.4 | 106.4 | 102.8 | 102.8 | 97.9 | 92.5 | 79.5 |
| Akron Abras ion | | cc loss | 0.177 | 0.169 | 0.176 | 0.161 | 0.165 | 0.171 | 0.167 | 0.163 | 0.155 | 0.152 | 0.145 | 0.129 | 0.115 | 0.110 | 0.090 |
| Index vs Sunthene | | | 100.0 | 104.7 | 100.6 | 109.9 | 107.3 | 103.5 | 106.0 | 108.6 | 114.2 | 116.4 | 122.1 | 137.2 | 153.9 | 160.9 | 196.7 |
| DIN Abrasion | | cc loss | 109 | 108 | 109 | 111 | 111 | 114 | 114 | 119 | 123 | 120 | 129 | 132 | 131 | 127 | 122 |
| Index vs Sunthene | | | 0.0 | 0.0 | 0.0 | 0.0 | 0.0 | 0.0 | 0.0 | 0.0 | 0.0 | 0.0 | 0.0 | 0.0 | 0.0 | 0.0 | 0.0 |
| Compression Set | | % | 47.7 | 36.3 | 37.9 | 35.1 | 33.6 | 32.4 | 34.8 | 32.1 | 34.0 | 33.8 | 35.4 | 35.9 | 42.7 | 44.0 | 57.0 |
| Index vs Sunthene | | | 100.0 | 131.4 | 125.9 | 135.9 | 142.0 | 147.2 | 137.1 | 148.6 | 140.3 | 141.1 | 134.7 | 132.9 | 111.7 | 108.4 | 83.7 |
| **Viscoelasticity** | | | | | | | | | | | | | | | | | |
| **-20°C** | | | | | | | | | | | | | | | | | |
| E' | | MPa | 58.0 | 96.8 | 102.2 | 99.7 | 98.4 | 82.2 | 96.5 | 94.5 | 97.2 | 92.8 | 94.5 | N/A | 96.8 | N/A | 122.3 |
| E" | | MPa | 9.0 | 15.8 | 16.6 | 16.7 | 16.0 | 13.8 | 16.3 | 15.8 | 15.8 | 15.5 | 15.7 | N/A | 15.4 | N/A | 18.7 |
| E* | | MPa | 58.7 | 98.0 | 103.5 | 101.1 | 99.7 | 83.4 | 97.9 | 95.8 | 98.5 | 94.1 | 95.8 | N/A | 98.0 | N/A | 123.7 |
| tand | | | 0.155 | 0.163 | 0.163 | 0.168 | 0.163 | 0.168 | 0.169 | 0.167 | 0.162 | 0.167 | 0.167 | N/A | 0.159 | N/A | 0.153 |
| Index vs Sunthene | | | 100 | 105 | 105 | 109 | 105 | 109 | 109 | 108 | 105 | 108 | 108 | N/A | 103 | N/A | 99 |
| **0°C** | | | | | | | | | | | | | | | | | |
| E' | | MPa | 42.7 | 62.6 | 63.8 | 60.9 | 61.2 | 50.7 | 60.9 | 59.8 | 60.5 | 60.1 | 59.6 | N/A | 64.9 | N/A | 95.0 |

EP 3 262 111 B1

(continued)

| | | | | | | | | | | | | | | | | |
|---|---|---|---|---|---|---|---|---|---|---|---|---|---|---|---|---|
| **0°C** | | | | | | | | | | | | | | | | |
| E" | MPa | 6.1 | 11.1 | 11.5 | 11.4 | 11.1 | 9.3 | 11.1 | 10.9 | 10.6 | 10.7 | 10.2 | N/A | 10.7 | N/A | 14.4 |
| E* | MPa | 43.1 | 63.6 | 64.8 | 62.0 | 62.2 | 51.5 | 61.9 | 60.8 | 61.4 | 61.0 | 60.4 | N/A | 65.7 | N/A | 96.1 |
| tand | | 0.144 | 0.177 | 0.180 | 0.187 | 0.181 | 0.183 | 0.182 | 0.182 | 0.176 | 0.179 | 0.171 | N/A | 0.165 | N/A | 0.151 |
| Index vs Sunthene | | 100 | 123 | 125 | 130 | 126 | 127 | 126 | 127 | 122 | 124 | 119 | N/A | 115 | N/A | 105 |
| **60°C** | | | | | | | | | | | | | | | | |
| E' | MPa | 23.1 | 21.1 | 23.4 | 21.4 | 22.0 | 17.7 | 21.9 | 21.4 | 22.7 | 22.4 | 23.5 | N/A | 24.9 | N/A | 34.4 |
| E" | MPa | 3.7 | 3.9 | 4.4 | 3.9 | 4.1 | 3.2 | 4.0 | 4.0 | 4.0 | 3.9 | 4.0 | N/A | 4.3 | N/A | 7.2 |
| E* | MPa | 23.4 | 21.4 | 23.8 | 21.7 | 22.3 | 18.0 | 22.2 | 21.8 | 23.1 | 22.7 | 23.8 | N/A | 25.3 | N/A | 35.2 |
| tand | | 0.160 | 0.186 | 0.187 | 0.181 | 0.184 | 0.180 | 0.183 | 0.187 | 0.177 | 0.175 | 0.171 | N/A | 0.172 | N/A | 0.208 |
| Index vs Sunthene | | 100 | 86 | 86 | 88 | 87 | 89 | 88 | 85 | 90 | 91 | 94 | N/A | 93 | N/A | 77 |

As shown in Table 12, the physical properties are generally improved by adding coconut oil with various FFA content as a component.

5-4. The effects of changing the content of additional coconut oils on various physical properties

5-4-1. Preparation and evaluation of the rubber composition before vulcanization (secondary compound)

The vulcanizable rubber used for the preparation is BR150L whose properties are summarized in Table 6 above. The secondary compounds were prepared according to the method described above and the recipe described in Table 13 below.

Table 13

| components | phr |
|---|---|
| S-SBR 1205 | 70 |
| BR150L | 30 |
| Silica (VN3) powder | 75 |
| Si69 | 6 |
| Added oil | See Table 14 |
| ZnO | 3 |
| St Acid | 1 |
| AO.6C | 1 |

The specifications and physical properties of the secondary compounds are summarized in Table 14 below.

Table 14

| Compound No. | | | C40 (Ref) | C41 | C42 (Ref) | C43 | C44 (Ref) | C45 | C46 (Ref) | C47 | C48 (Ref) | C49 | C50 (Ref) | C51 | C52 (Ref) | C53 |
|---|---|---|---|---|---|---|---|---|---|---|---|---|---|---|---|---|
| Additional Oil | Type | | Sunthene 4240 | Coconut FFA7% | Sunthene 4240 | Coconut FFA7% | Sunthene 4240 | Coconut FFA7% | Sunthene 4240 | Coconut FFA7% | Sunthene 4240 | Coconut FFA7% | Sunthene 4240 | Coconut FFA7% | Sunthene 4240 | Coconut FFA7% |
| | Iodine value (wijs) | | NA | 10.5 | NA | 10.5 | NA | 10.5 | NA | 10.5 | NA | 10.5 | NA | 10.5 | NA | 10.5 |
| | phr | | 10 | 10 | 15 | 15 | 21.5 | 21.5 | 30 | 30 | 37.5 | 37.5 | 50 | 50 | 80 | 80 |
| Mooney viscosity; 1st | $ML_{1+4}$, 100°C | | 99.3 | 86 | 74.8 | 66.3 | 60.9 | 43.3 | 43.8 | 29.1 | 35 | 19.2 | 23.9 | 12.2 | 12.6 | 5.4 |
| Mooney viscosity; 2nd | $ML_{114}$, 100°C | | 82.6 | 69.8 | 63.8 | 53.8 | 52.5 | 36.0 | 39.1 | 24.7 | 32.7 | 16.3 | 22.4 | 10.3 | 11.8 | 5.7 |
| Curing rate (160 °C) | Min. T | (dN·m) | 2.2 | 1.8 | 1.6 | 1.3 | 1.3 | 0.9 | 1.0 | 0.7 | 0.9 | 0.5 | 0.6 | 0.3 | 0.3 | 0.2 |
| | Max. T | (dN·m) | 22.6 | 24.0 | 20.9 | 21.8 | 17.3 | 19.4 | 14.0 | 16.4 | 12.4 | 14.8 | 9.0 | 11.2 | 4.8 | 6.7 |
| | Ts1 | min. | 1.0 | 1.2 | 0.6 | 1.3 | 1.3 | 2.0 | 2.2 | 2.6 | 2.4 | 3.3 | 3.3 | 4.3 | 5.2 | 6.1 |
| | Tc (10) | min. | 2.2 | 2.5 | 2.1 | 2.6 | 2.3 | 3.2 | 2.5 | 3.5 | 3.0 | 4.0 | 3.1 | 4.4 | 3.5 | 5.4 |
| | Tc (90) | min. | 7.21 | 7.30 | 7.29 | 7.45 | 8.01 | 8.16 | 8.32 | 8.43 | 8.47 | 9.13 | 9.32 | 9.58 | 10.54 | 12.20 |

**EP 3 262 111 B1**

5-4-2. Vulcanization and evaluation of the vulcanizates

The vulcanization was conducted according to the method described above and the recipe described in Table 4 above. The physical properties of the vulcanizates are summarized in Table 15 below.

24

Table 15

| Compound No. | | C40 (Ref) | C41 | C42 (Ref) | C43 | C44 (Ref) | C45 | C46 (Ref) | C47 | C48 (Ref) | C49 | C50 (Ref) | C51 | C52 (Ref) | C53 |
|---|---|---|---|---|---|---|---|---|---|---|---|---|---|---|---|
| Hardness Type A | | 82 | 81 | 80 | 79 | 76 | 75 | 72 | 71 | 68 | 67 | 62 | 61 | 50 | 50 |
| Specific Gravity | - | 1.203 | 1.202 | 1.195 | 1.195 | 1.185 | 1.185 | 1.172 | 1.170 | 1.162 | 1.161 | 1.148 | 1.144 | 1.118 | 1.114 |
| 100% Modulus | kg/cm$^2$ | 40 | 40 | 35 | 36 | 30 | 30 | 24 | 27 | 22 | 24 | 17 | 20 | 12 | 13 |
| 200% Modulus | kg/cm$^2$ | 83 | 80 | 69 | 71 | 57 | 59 | 46 | 52 | 41 | 46 | 31 | 37 | 20 | 23 |
| 300% Modulus | kg/cm$^2$ | 134 | 130 | 110 | 115 | 90 | 98 | 73 | 84 | 63 | 75 | 47 | 58 | 29 | 34 |
| Tensile strength | kg/cm$^2$ | 154 | 144 | 156 | 146 | 149 | 144 | 143 | 140 | 130 | 122 | 115 | 120 | 69 | 97 |
| Elongation | % | 341 | 328 | 408 | 370 | 462 | 414 | 539 | 462 | 590 | 457 | 659 | 554 | 689 | 697 |
| Tear resistance | kg/cm | 67 | 60 | 63 | 55 | 58 | 56 | 54 | 53 | 51 | 50 | 46 | 45 | 29 | 32 |
| Rebound BS | % | 41.4 | 42.9 | 39.5 | 42.9 | 40.0 | 43.8 | 40.9 | 45.2 | 40.0 | 45.8 | 37.3 | 45.8 | 34.1 | 42.9 |
| Index vs Sunthene | | 100 | 103.5 | 100 | 109 | 100 | 109 | 100 | 111 | 100 | 114 | 100 | 123 | 100 | 126 |
| Akron Abrasion | cc loss | 0.099 | 0.104 | 0.120 | 0.115 | 0.156 | 0.128 | 0.173 | 0.131 | 0.202 | 0.146 | 0.285 | 0.167 | 0.457 | 0.277 |
| Index vs Sunthene | | 100 | 95.2 | 100 | 104 | 100 | 122 | 100 | 132 | 100 | 138 | 100 | 171 | 100 | 165 |
| DIN Abrasion | cc loss | 111 | 115 | 118 | 113 | 119 | 114 | 120 | 113 | 122 | 111 | 131 | 107 | 179 | 113 |
| Index vs Sunthene | | 100 | 97 | 100 | 104 | 100 | 104 | 100 | 106 | 100 | 110 | 100 | 122 | 100 | 158 |
| Compression Set | % | 43.2 | 35.8 | 43.7 | 30.4 | 48.2 | 31.8 | 53.2 | 37.3 | 45.9 | 32.3 | 47.6 | 40.2 | 50.9 | 41.0 |
| Index vs Sunthene | | 100 | 120.7 | 100 | 144 | 100 | 152 | 100 | 143 | 100 | 142 | 100 | 118 | 100 | 124 |
| **Viscoelasticity** | | | | | | | | | | | | | | | |
| **-20°C** | | | | | | | | | | | | | | | |
| E' | MPa | 75.9 | 88.3 | 70.4 | 85.6 | 59.9 | 90.4 | 43.1 | 100.9 | 42.6 | 93.6 | N/A | N/A | 19.6 | 147.3 |
| E" | MPa | 10.8 | 13.4 | 9.7 | 13.1 | 9.4 | 15.1 | 7.4 | 17.8 | 7.7 | 15.9 | N/A | N/A | 4.6 | 19.9 |
| E* | MPa | 76.7 | 89.3 | 71.0 | 86.6 | 60.7 | 91.7 | 43.8 | 102.5 | 43.3 | 94.9 | N/A | N/A | 20.1 | 148.7 |
| tand | | 0.142 | 0.152 | 0.138 | 0.153 | 0.157 | 0.167 | 0.173 | 0.176 | 0.182 | 0.170 | N/A | N/A | 0.234 | 0.135 |
| Index vs Sunthene | | 100 | 107 | 100 | 111 | 100 | 106 | 100 | 102 | 100 | 94 | N/A | N/A | 100 | 58 |
| **0°C** | | | | | | | | | | | | | | | |
| E' | MPa | 57.1 | 60.5 | 54.1 | 58.4 | 43.7 | 57.2 | 30.5 | 56.2 | 29.8 | 54.4 | N/A | N/A | 12.9 | 79.3 |

EP 3 262 111 B1

| 0°C | | | | | | | | | | | | | | |
|---|---|---|---|---|---|---|---|---|---|---|---|---|---|---|
| E" | MPa | 7.9 | 9.5 | 7.2 | 9.2 | 6.8 | 10.5 | 5.2 | 11.7 | 5.4 | 10.9 | N/A | N/A | 2.8 | 13.7 |
| E* | MPa | 57.7 | 61.2 | 54.6 | 59.1 | 44.3 | 58.1 | 31.0 | 57.4 | 30.3 | 55.5 | N/A | N/A | 13.2 | 80.5 |
| tand | | 0.138 | 0.157 | 0.133 | 0.158 | 0.155 | 0.183 | 0.170 | 0.208 | 0.180 | 0.201 | N/A | N/A | 0.217 | 0.173 |
| Index vs Sunthene | | 100 | 114 | 100 | 119 | 100 | 118 | 100 | 122 | 100 | 112 | N/A | N/A | 100 | 80 |
| **60°C** | | | | | | | | | | | | | | | |
| E' | MPa | 32.1 | 30.9 | 29.6 | 25.2 | 24.4 | 19.9 | 16.9 | 15.4 | 16.5 | 11.3 | N/A | N/A | 6.5 | 4.7 |
| E" | MPa | 5.2 | 5.5 | 4.7 | 4.4 | 4.0 | 3.7 | 2.9 | 2.9 | 2.8 | 1.9 | N/A | N/A | 1.3 | 0.6 |
| E* | MPa | 32.5 | 31.4 | 30.0 | 25.6 | 24.7 | 20.3 | 17.2 | 15.6 | 16.8 | 11.4 | N/A | N/A | 6.6 | 4.7 |
| tand | | 0.163 | 0.179 | 0.158 | 0.175 | 0.163 | 0.187 | 0.170 | 0.186 | 0.171 | 0.166 | N/A | N/A | 0.207 | 0.135 |
| Index vs Sunthene | | 100 | 91 | 100 | 90 | 100 | 87 | 100 | 91 | 100 | 103 | N/A | N/A | 100 | 154 |

EP 3 262 111 B1

26

As shown in Table 15, the physical properties are generally improved by adding coconut oil with various amounts as a component.

5-5. The effects of changing the diene-based rubbers

5-5-1. Preparation and evaluation of the rubber composition before vulcanization (secondary compound)

The vulcanizable rubber used for the preparation is BR150L whose properties are summarized in Table 6 above. The secondary compounds were prepared according to the method described above and the recipe described in Table 16 below.

Table 16

| components / phr | C54 (Ref) | C55 | C56 (Ref) | C57 |
|---|---|---|---|---|
| S-SBR 1205 | 70 | 70 | - | - |
| E-SBR 1502 | - | - | 70 | 70 |
| BR150L | 30 | 30 | 30 | 30 |
| Silica (VN3) powder | 75 | 75 | 75 | 75 |
| Si69 | 6 | 6 | 6 | 6 |
| Added oil | 21.5 (Sunthene oil 4240) | 21.5 (Coconut FFA7%) | 21.5 (Sunthene oil 4240) | 21.5 (Coconut FFA 7%) |
| ZnO | 3 | 3 | 3 | 3 |
| St Acid | 1 | 1 | 1 | 1 |
| AO.6C | 1 | 1 | 1 | 1 |

The physical properties of the secondary compounds are summarized in Table 17 below.

Table 17

| Compound No. | | C54 (Ref) | C55 | C56 (Ref) | C57 |
|---|---|---|---|---|---|
| Additional Oil | Type | Sunthene 4240 | Coconut FFA7% | Sunthene 4240 | Coconut FFA7% |
| Mooney viscosity; 1st | $ML_{1+4}$,100°C | 59.9 | 45.4 | 67.9 | 56.1 |
| Mooney viscosity; 2nd | $ML_{1+4}$,100°C | 51.2 | 36.4 | 56.9 | 48.5 |
| Curing rate (160 °C) | Min. T (dN·m) | 1.4 | 0.9 | 1.7 | 1.5 |
| | Max. T (dN·m) | 19.0 | 20.6 | 21.8 | 21.7 |
| | Ts1 min. | 1.2 | 1.5 | 1.5 | 1.5 |
| | Tc(10) min. | 2.2 | 2.6 | 3.0 | 2.5 |
| | Tc(90) min. | 7.28 | 7.41 | 8.34 | 7.22 |

5-5-2. Vulcanization and evaluation of the vulcanizates

The vulcanization was conducted according to the method described above and the recipe described in Table 4 above. The physical properties of the vulcanizates are summarized in Table 18 below.

Table 18

| Compound No. | | | C54 (Ref) | C55 | C56 (Ref) | C57 |
|---|---|---|---|---|---|---|
| Hardness | Type A | | 77 | 78 | 69 | 70 |

(continued)

| Compound No. | | | C54 (Ref) | C55 | C56 (Ref) | C57 |
|---|---|---|---|---|---|---|
| Specific Gravity | | - | 1.186 | 1.185 | 1.187 | 1.187 |
| 100% Modulus | | kg/cm$^2$ | 33 | 34 | 24 | 26 |
| 200% Modulus | | kg/cm$^2$ | 65 | 68 | 59 | 62 |
| 300% Modulus | | kg/cm$^2$ | 101 | 110 | 113 | 114 |
| Tensile strength | | kg/cm$^2$ | 150 | 154 | 161 | 154 |
| Elongation | | % | 421 | 396 | 376 | 362 |
| Tear resistance | | kg/cm | 62 | 62 | 69 | 61 |
| Rebound | BS | % | 32.0 | 41.4 | 50.0 | 52.0 |
| Index vs Sunthene | | | 100 | 129.4 | 100 | 104 |
| Akron Abrasion | | cc loss | 0.142 | 0.112 | 0.151 | 0.134 |
| Index vs Sunthene | | | 100 | 126.8 | 100 | 113 |
| Compression Set | | % | 44.2 | 31.2 | 21.6 | 23.9 |
| Index vs Sunthene | | | 100 | 142 | 100 | 90 |
| DIN Abrasion | | cc loss | 115.0 | 109.0 | 106.0 | 103.0 |
| Index vs Sunthene | | | 100 | 105.5 | 100 | 102.9 |
| Heat Build Up | ΔT | °C | 40.0 | 40.0 | 25.0 | 21.0 |
| | PS | % | 35.5 | 26.8 | 10.2 | 6.4 |
| **Viscoelasticity** | | | | | | |
| **-20°C** | | | | | | |
| E' | | MPa | 105.3 | 155.6 | 42.8 | 82.4 |
| E" | | MPa | 14.0 | 22.5 | 10.3 | 15.9 |
| E* | | MPa | 106.2 | 157.2 | 44.0 | 83.9 |
| tand | | | 0.133 | 0.145 | 0.241 | 0.193 |
| Index vs Sunthene | | | 100 | 109 | 100 | 80 |
| **0°C** | | | | | | |
| E' | | MPa | 81.0 | 89.1 | 30.2 | 47.8 |
| E" | | MPa | 11.5 | 14.4 | 5.2 | 8.8 |
| E* | | MPa | 81.8 | 90.3 | 30.6 | 48.6 |
| tand | | | 0.142 | 0.161 | 0.173 | 0.183 |
| Index vs Sunthene | | | 100 | 114 | 100 | 106 |
| **60°C** | | | | | | |
| E' | | MPa | 52.3 | 35.4 | 19.7 | 19.7 |
| E" | | MPa | 7.4 | 6.5 | 2.4 | 2.4 |
| E* | | MPa | 52.8 | 36.0 | 19.8 | 19.9 |
| tand | | | 0.142 | 0.184 | 0.121 | 0.123 |
| Index vs Sunthene | | | 100 | 77 | 100 | 99 |

As shown in Table 18, the physical properties are generally improved by adding coconut oil regardless of the type of the diene-based rubbers.

5-6. The effects of changing the additional oils

5-6-1. Preparation and evaluation of the rubber composition before vulcanization (secondary compound)

The vulcanizable rubber used for the preparation is BR150L whose properties are summarized in Table 6 above. The secondary compounds were prepared according to the method described above and the recipe described in Table 19 below.

Table 19

| components / phr | C56 (Ref) | C57 | C58 (Ref) | C59 (Ref) | C60 (Ref) | C61 (Ref) | C62 (Ref) | C63 (Ref) | C64 (Ref) | C65 (Ref) | C66 (Ref) |
|---|---|---|---|---|---|---|---|---|---|---|---|
| E-SBR 1502 | 70 | 70 | 70 | 70 | 70 | 70 | 70 | 70 | 70 | 70 | 70 |
| BR150L | 30 | 30 | 30 | 30 | 30 | 30 | 30 | 30 | 30 | 30 | 30 |
| Silica (VN3) powder | 75 | 75 | 75 | 75 | 75 | 75 | 75 | 75 | 75 | 75 | 75 |
| Si69 | 6 | 6 | 6 | 6 | 6 | 6 | 6 | 6 | 6 | 6 | 6 |
| Added oil | 21.5 (Sunthene oil 4240) | 21.5 (Coconut FFA 7%) | 21.5 (Soybean oil) | 21.5 (Palm oil) | 21.5 (Corn oil) | 21.5 (Rice Bran oil, Oryzanol 2500ppm) | 21.5 (Rice Bran oil, Oryzanol 6000ppm) | 21.5 (Sesame oil) | 21.5 (Olive oil) | 21.5 (Sun Flower oil) | 21.5 (Canola oil) |
| ZnO | 3 | 3 | 3 | 3 | 3 | 3 | 3 | 3 | 3 | 3 | 3 |
| St Acid | 1 | 1 | 1 | 1 | 1 | 1 | 1 | 1 | 1 | 1 | 1 |
| AO.6C | 1 | 1 | 1 | 1 | 1 | 1 | 1 | 1 | 1 | 1 | 1 |

The physical properties of the secondary compounds are summarized in Table 20 below.

Table 20

| Compound No. | | | C56 (Ref) | C57 | C58 (Ref) | C59 (Ref) | C60 (Ref) | C61 (Ref) | C62 (Ref) | C63 (Ref) | C64 (Ref) | C65 (Ref) | C66 (Ref) |
|---|---|---|---|---|---|---|---|---|---|---|---|---|---|
| Additional Oil | Type | | Sunthene 4240 | Coconut FFA7% | Soy-oil | Palm-oil | Corn-oil | Ri6000-Oil | Ri2500-Oil | Se-oil | Ol-oil | SunF-oil | Ca-oil |
| Mooney viscosity; 1st | $ML_{1+4}$,100°C | | 67.9 | 56.1 | 61.4 | 58.9 | 61.1 | 59.6 | 61.4 | 61.8 | 62.9 | 65 | 64.3 |
| Mooney viscosity; 2nd | $ML_{1+4}$,100°C | | 56.9 | 48.5 | 53.1 | 55.8 | 53.8 | 52.5 | 53.9 | 53.3 | 55.0 | 54.8 | 55.3 |
| Curing rate (160 °C) | Min. T | (dN·m) | 1.7 | 1.5 | 1.7 | 1.6 | 1.6 | 1.6 | 1.6 | 1.7 | 1.7 | 1.8 | 1.8 |
| | Max. T | (dN·m) | 21.8 | 21.7 | 19.4 | 20.6 | 19.9 | 20.2 | 20.0 | 19.7 | 20.7 | 19.5 | 19.9 |
| | Ts1 | min. | 1.5 | 1.5 | 1.3 | 1.4 | 1.3 | 1.3 | 1.3 | 1.4 | 1.3 | 1.3 | 1.3 |
| | Tc(10) | min. | 3.0 | 2.5 | 2.3 | 2.4 | 2.3 | 2.3 | 2.3 | 2.3 | 2.4 | 2.2 | 2.3 |
| | Tc(90) | min. | 8.34 | 7.22 | 7.21 | 7.35 | 7.33 | 7.13 | 7.29 | 7.32 | 7.53 | 7.17 | 7.01 |

EP 3 262 111 B1

5-6-2. Vulcanization and evaluation of the vulcanizates

The vulcanization was conducted according to the method described above and the recipe described in Table 4 above. The physical properties of the vulcanizates are summarized in Table 21 below.

Table 21

| Compound No. | | | C56 (Ref) | C57 | C58 (Ref) | C59 (Ref) | C60 (Ref) | C61 (Ref) | C62 (Ref) | C63 (Ref) | C64 (Ref) | C65 (Ref) | C66 (Ref) |
|---|---|---|---|---|---|---|---|---|---|---|---|---|---|
| Hardness | Type A | | 69 | 70 | 67 | 68 | 66 | 68 | 68 | 67 | 68 | 67 | 67 |
| Specific Gravity | | - | 1.187 | 1.187 | 1.187 | 1.186 | 1.188 | 1.187 | 1.188 | 1.189 | 1.188 | 1.189 | 1.188 |
| 100% Modulus | | kg/cm² | 24 | 26 | 20 | 22 | 20 | 22 | 21 | 20 | 22 | 20 | 21 |
| 200% Modulus | | kg/cm² | 59 | 62 | 43 | 51 | 46 | 48 | 46 | 45 | 50 | 43 | 47 |
| 300% Modulus | | kg/cm² | 113 | 114 | 82 | 97 | 87 | 90 | 89 | 86 | 95 | 83 | 91 |
| Tensile strength | | kg/cm² | 161 | 154 | 217 | 172 | 187 | 189 | 185 | 179 | 183 | 190 | 199 |
| Elongation | | % | 376 | 362 | 578 | 444 | 501 | 494 | 488 | 485 | 463 | 513 | 505 |
| Tear resistance | | kg/cm | 69 | 61 | 70 | 66 | 69 | 67 | 62 | 69 | 65 | 65 | 65 |
| Rebound | BS | % | 50.0 | 52.0 | 48.9 | 49.8 | 49.8 | 48.9 | 50.4 | 47.3 | 48.9 | 48.9 | 51.3 |
| Index vs Sunthene | | | 100 | 104 | 98 | 100 | 100 | 98 | 101 | 95 | 98 | 98 | 103 |
| Akron Abrasion | | cc loss | 0.151 | 0.134 | 0.188 | 0.141 | 0.170 | 0.168 | 0.142 | 0.165 | 0.140 | 0.164 | 0.162 |
| Index vs Sunthene | | | 100 | 113 | 80 | 107 | 89 | 90 | 106 | 92 | 108 | 92 | 93 |
| Compression Set | | % | 21.6 | 23.9 | 25.7 | 25.6 | 25.5 | 23.3 | 23.4 | 25.4 | 26.5 | 25.4 | 25.1 |
| Index vs Sunthene | | | 100 | 90 | 84 | 84 | 85 | 93 | 92 | 85 | 82 | 85 | 86 |
| DIN Abrasion | | cc loss | 106.0 | 103.0 | 92.0 | 98.0 | 96.0 | 100.0 | 98.0 | 96.0 | 101.0 | 96.0 | 97.0 |
| Index vs Sunthene | | | 100 | 102.9 | 115.2 | 108.2 | 110.4 | 106.0 | 108.2 | 110.4 | 105.0 | 110.4 | 109.3 |
| Heat Build Up | ΔT | °C | 25.0 | 21.0 | 33.0 | 26.0 | 32.0 | 28.0 | 29.0 | 31.0 | 27.0 | 32.0 | 31.0 |
| | PS | % | 10.2 | 6.4 | 14.8 | 9.6 | 13.3 | 11.6 | 11.5 | 12.4 | 10.7 | 14.8 | 13.2 |
| **Viscoelasticity** | | | | | | | | | | | | | |
| **-20°C** | | | | | | | | | | | | | |
| E' | | MPa | 42.8 | 82.4 | 36.6 | 51.2 | 36.4 | 39.4 | 37.8 | | | | |
| E" | | MPa | 10.3 | 15.9 | 7.7 | 11.2 | 7.7 | 8.5 | 8.3 | | | | |
| E* | | MPa | 44.0 | 83.9 | 37.4 | 52.4 | 37.2 | 40.3 | 38.7 | | | | |
| tand | | | 0.241 | 0.193 | 0.211 | 0.218 | 0.211 | 0.215 | 0.220 | | | | |
| Index vs Sunthene | | | 100 | 80 | 88 | 91 | 88 | 89 | 91 | | | | |

(continued)

| | | | | | | | | | | | | |
|---|---|---|---|---|---|---|---|---|---|---|---|---|
| **0°C** | | | | | | | | | | | | |
| E' | MPa | 30.2 | 47.8 | 27.2 | 28.1 | 27.0 | 27.4 | 26.4 | | | | |
| E" | MPa | 5.2 | 8.8 | 4.9 | 5.2 | 4.9 | 4.9 | 4.8 | | | | |
| E* | MPa | 30.6 | 48.6 | 27.6 | 28.6 | 27.4 | 27.8 | 26.8 | | | | |
| tand | | 0.173 | 0.183 | 0.179 | 0.186 | 0.180 | 0.179 | 0.181 | | | | |
| Index vs Sunthene | | 100 | 106 | 104 | 107 | 104 | 104 | 105 | | | | |
| **60°C** | | | | | | | | | | | | |
| E' | MPa | 19.7 | 19.7 | 18.8 | 18.7 | 18.9 | 19.6 | 18.4 | | | | |
| E" | MPa | 2.4 | 2.4 | 2.5 | 2.3 | 2.4 | 2.4 | 2.3 | | | | |
| E* | MPa | 19.8 | 19.9 | 18.9 | 18.8 | 19.1 | 19.7 | 18.5 | | | | |
| tand | | 0.121 | 0.123 | 0.133 | 0.120 | 0.126 | 0.123 | 0.123 | | | | |
| Index vs Sunthene | | 100 | 99 | 91 | 101 | 96 | 99 | 98 | | | | |

As shown in Table 21, the physical properties are generally improved by adding coconut oil compared to the cases where other additional oils are employed.

5-7. The effect of using coconut oil in polymer blends with standard carbon black compound

5-7-1. Non-Productive Mixing (Primary Compound)

During the non-productive mixing, all components except the vulcanizing agent and accelerators were mixed in the standard mixer such as a banbury mixer with initial temperature at 90 °C within 6 minutes mixing time. Firstly, half of diene polymers were put into banbury mixer, then, all of filler was added into mixer, after that another half of diene polymers were put into mixer. All of mixtures were mixed in banbury mixer for 3 minutes. Then, ram of mixer chamber was opened up for cleaning residue filler at 3 minute of mixing process. The mixing process had proceeded for 6 minutes or temperature reached 170 °C. The mixed compounds were rolled at preferred temperature range of 35-45 °C using the standard roller with nip clearance of 6 millimeter. The samples of the compound sheets were left at room temperature for 1-24 hrs. Then, the compound samples were subject to the Mooney viscosity measurement.

The compositions are summarized is Tables 22 and 23 below, the former of which is described in phr and the latter of which is described in grams.

Table 22

| | C67 (Ref) | C68 | C69 (Ref) | C70 | C71 (Ref) | C72 | C73 (Ref) | C74 |
|---|---|---|---|---|---|---|---|---|
| BR150L | 100 | 100 | 50 | 50 | 50 | 50 | | |
| NR (ML = 70) | | | 50 | 50 | | | 50 | 50 |
| SBR1502 | | | | | 50 | 50 | 50 | 50 |
| I R B #8 | 60 | 60 | 60 | 60 | 60 | 60 | 60 | 60 |
| Sunthene#4240 | 15 | | 15 | | 15 | | 15 | |
| Coconut oil FFA7% | | 15 | | 15 | | 15 | | 15 |
| ZnO | 3 | 3 | 3 | 3 | 3 | 3 | 3 | 3 |
| stearic acid | 2 | 2 | 2 | 2 | 2 | 2 | 2 | 2 |
| | 180 | 180 | 180 | 180 | 180 | 180 | 180 | 180 |
| | | | | | | | | |
| Compound | 180 | 180 | 180 | 180 | 180 | 180 | 180 | 180 |
| NS | 0.9 | 0.9 | 0.9 | 0.9 | 0.9 | 0.9 | 0.9 | 0.9 |
| sulfur | 1.5 | 1.5 | 1.5 | 1.5 | 1.5 | 1.5 | 1.5 | 1.5 |
| | 182.4 | 182.4 | 182.4 | 182.4 | 182.4 | 182.4 | 182.4 | 182.4 |

Table 23

| | C67 (Ref) | C68 | C69 (Ref) | C70 | C71 (Ref) | C72 | C73 (Ref) | C74 |
|---|---|---|---|---|---|---|---|---|
| BR150L | 700 | 700 | 350 | 350 | 350 | 350 | 0 | 0 |
| NR (ML = 70) | 0 | 0 | 350 | 350 | 0 | 0 | 350 | 350 |
| SBR1502 | 0 | 0 | 0 | 0 | 350 | 350 | 350 | 350 |
| IRB#8 | 420 | 420 | 420 | 420 | 420 | 420 | 420 | 420 |
| Sunthene#4240 | 105 | 0 | 105 | 0 | 105 | 0 | 105 | 0 |
| Coconut oil FFA7% | 0 | 105 | 0 | 105 | 0 | 105 | 0 | 105 |
| ZnO | 21 | 21 | 21 | 21 | 21 | 21 | 21 | 21 |
| stearic acid | 14 | 14 | 14 | 14 | 14 | 14 | 14 | 14 |

(continued)

|  | C67 (Ref) | C68 | C69 (Ref) | C70 | C71 (Ref) | C72 | C73 (Ref) | C74 |
|---|---|---|---|---|---|---|---|---|
|  | 1260 | 1260 | 1260 | 1260 | 1260 | 1260 | 1260 | 1260 |
|  |  |  |  |  |  |  |  |  |
| Compound | 1170 | 1170 | 1170 | 1170 | 1170 | 1170 | 1170 | 1170 |
| NS | 5.85 | 5.85 | 5.85 | 5.85 | 5.85 | 5.85 | 5.85 | 5.85 |
| sulfur | 12.19 | 12.19 | 12.19 | 12.19 | 12.19 | 12.19 | 12.19 | 12.19 |
|  | 1188.0 | 1188.0 | 1188.0 | 1188.0 | 1188.0 | 1188.0 | 1188.0 | 1188.0 |

5-7-2. Productive Mixing (Secondary Compound)

The sheets of the primary compounds obtained from the aforementioned non-productive mixing were then subject to the mixing with vulcanizing agent, most preferably sulfur, and the vulcanizing accelerators by using the standard roll at preferred temperature range of 35-45 °C within 3 minutes. The rubber compounds from the productive mixing (secondary compound) have been pulled in sheets and the samples were then subject to the measurements of Mooney viscosity (ML1+4,100 °C), curing time on a Moving Die Rheometer (MDR) at 160 °C.
The results are summarized in Table 24 below.

EP 3 262 111 B1

Table 24

| Product name | | | C67 (Ref) | C68 | C69 (Ref) | C70 | C71 (Ref) | C72 | C73 (Ref) | C74 |
|---|---|---|---|---|---|---|---|---|---|---|
| | | Oil Type | Sunthene | Coconut | Sunthene | Coconut | Sunthene | Coconut | Sunthene | Coconut |
| Mooney viscosity; 1st | | ML$_{1+4}$,100 | 75.4 | 67.9 | 60.1 | 57.4 | 64.3 | 61.4 | 48.7 | 47.0 |
| Mooney viscosity; 2nd | | ML1+4,100°C | 65.0 | 58.6 | 46.3 | 44.9 | 55.9 | 53.1 | 38.3 | 36.1 |
| Curing rate (160 °C) | Min. T | (dN · m) | 2.7 | 2.6 | 2.0 | 2.0 | 2.2 | 2.1 | 1.6 | 1.5 |
| | Max. T | (dN · m) | 19.6 | 20.3 | 15.8 | 16.5 | 16.7 | 16.7 | 13.7 | 13.5 |
| | Ts1 | min. | 3.0 | 2.6 | 3.0 | 2.5 | 4.2 | 4.2 | 3.5 | 3.4 |
| | Tc(10) | min. | 4.3 | 4.2 | 3.3 | 3.1 | 5.4 | 5.3 | 4.2 | 3.6 |
| | Tc(90) | min. | 11.00 | 11.12 | 7.08 | 6.58 | 16.34 | 16.24 | 11.21 | 10.45 |

5-7-3. Vulcanization and Properties of the Filler-Filled Vulcanizates

The secondary filler-filled rubber compounds obtained from the productive mixing were processed in the mold pressing at 145 °C and 35 minutes. The rubber vulcanizates in various forms of the specimens were then subject to the measurements of the viscoelastic property during the temperature sweep, tensile strength, hardness, specific gravity, tear resistance, rebound resilience, abrasion resistance, and compression set.

The results are summarized in Table 25 below.

Table 25

| Product name | | Oil Type | C67 (Ref) Sunthene | C68 Coconut | C69 (Ref) Sunthene | C70 Coconut | C71 (Ref) Sunthene | C72 Coconut | C73 (Ref) Sunthene | C74 Coconut |
|---|---|---|---|---|---|---|---|---|---|---|
| Hardness | Type A | | 64 | 64 | 62 | 62 | 59 | 59 | 61 | 60 |
| Specific Gravity | | - | 1.114 | 1.115 | 1.119 | 1.118 | 1.127 | 1.126 | 1.132 | 1.131 |
| 100% Modulus | | kg/cm² | 25 | 28 | 25 | 27 | 22 | 24 | 27 | 26 |
| 200% Modulus | | kg/cm² | 59 | 67 | 64 | 70 | 51 | 57 | 68 | 69 |
| 300% Modulus | | kg/cm² | 116 | 131 | 121 | 131 | 95 | 108 | 125 | 128 |
| Tensile strength | | kg/cm² | 182 | 179 | 238 | 221 | 209 | 190 | 236 | 228 |
| Elongation | | % | 416 | 377 | 505 | 450 | 540 | 449 | 506 | 482 |
| Tear resistance | | kg/cm | 66 | 61 | 60 | 58 | 64 | 58 | 59 | 54 |
| Rebound | BS | % | 64.6 | 64.6 | 56.8 | 60.2 | 50.4 | 52.9 | 45.8 | 48.2 |
| vs Sunthene | | Index | 100 | 100 | 100 | 106 | 100 | 105 | 100 | 105 |
| Akron Abrasion | | cc loss | 0.005 | 0.005 | 0.173 | 0.160 | 0.126 | 0.098 | 0.245 | 0.226 |
| vs Sunthene | | Index | 100 | 100 | 100 | 108 | 100 | 129 | 100 | 108 |
| Din Abrasion | | cc loss | 43 | 39 | 84 | 75 | 78 | 72 | 126 | 115 |
| vs Sunthene | | Index | 100 | 110 | 100 | 112 | 100 | 108 | 100 | 110 |

As shown in Table 25, the physical properties are generally improved by using coconut oil compared to the cases where petroleum oil is used instead. It has also been found that such changes are more drastic when NR and/or SBR1502 were employed for the primary compound.

5-8. The effect of using coconut oil in polymer blends with silica compound

5-8-1. Non-Productive Mixing (Primary Compound)

During the non-productive mixing, all components except the vulcanizing agent and accelerators were mixed in the standard mixer such as a banbury mixer with initial temperature at 90 °C within 6 minutes mixing time. Firstly, all of mixtures of diene polymers were mixed in banbury mixer for 30 seconds. Then, half of filler especially silica and silane coupling agent were added in to mixer. At 1 minute and 30 seconds of mixing process, another half of filler and other rubber compound ingredients were added into mixer. Then, ram of mixer chamber was opened up for cleaning residue filler. The mixing process had proceeded for 6 minutes. When mixing temperature reached 145 °C, the rotor speed of mixer had been reduced. The mixed compounds were rolled at preferred temperature range of 55-65 °C using the standard roller with nip clearance of 2 millimeter. The samples of the compound sheets were subject to the Mooney viscosity measurement.

The compositions are summarized is Tables 26 and 27 below, the former of which is described in phr and the latter of which is described in grams. The properties of various BRs are summarized in Table 28 below.

Table 26

|  |  |  | CBR(ML46) | CBR-(ML52) |
|---|---|---|---|---|
|  | BR150L | ML46 | oil 21.5 | oil 21.5 |
|  | C75 (Ref) | C76 | C77 | C78 |
| S-SBR 1205 | 70 | 70 | 70 | 70 |
| BR150L | 30 | 30 | 36.5 | 36.5 |
| Silica (VN3) powder | 75 | 75 | 75 | 75 |
| Si69 | 6 | 6 | 6 | 6 |
| Sunthene oil 4240 | 21.5 |  | 15.0 | 15.0 |
| Coconut FFA 7% |  | 21.5 |  |  |
| ZnO | 3 | 3 | 3 | 3 |
| St Acid | 1 | 1 | 1 | 1 |
| AO.6C | 1 | 1 | 1 | 1 |
|  | 207.5 | 207.5 | 207.45 | 207.45 |
|  |  |  |  |  |
|  |  |  |  |  |
| CBS | 1.7 | 1.7 | 1.7 | 1.7 |
| DPG | 2 | 2 | 2 | 2 |
| Sulfur | 1.4 | 1.4 | 1.4 | 1.4 |
| Total | 212.6 | 212.6 | 212.6 | 212.6 |

Table 27

|  |  |  | CBR(ML46) | CBR-(ML52) |
|---|---|---|---|---|
|  | BR150L | ML46 | oil 21.5 | oil 21.5 |
|  | C75 (Ref) | C76 | C77 | C78 |
| S-SBR 1205 | 420 | 420 | 420 | 420 |

(continued)

|  |  |  | CBR(ML46) | CBR-(ML52) |
|---|---|---|---|---|
|  | BR150L | ML46 | oil 21.5 | oil 21.5 |
| BR150L | 180 | 180 | 218.7 | 218.7 |
| Silica (VN3) powder | 450 | 450 | 450 | 450 |
| Si69 | 36 | 36 | 36 | 36 |
| Sunthene oil 4240 | 129 |  | 90 | 90 |
| Coconut FFA 7% |  | 129 |  |  |
| ZnO | 18 | 18 | 18 | 18 |
| St Acid | 6 | 6 | 6 | 6 |
| AO.6C | 6 | 6 | 6 | 6 |
|  | 1245 | 1245 | 1244.7 | 1244.7 |
|  |  |  |  |  |
|  | 1037.5 | 1037.5 | 1037.25 | 1037.25 |
| CBS | 8.5 | 8.5 | 8.5 | 8.5 |
| DPG | 10 | 10 | 10 | 10 |
| Sulfur | 7 | 7 | 7 | 7 |
| Total | 1063.0 | 1063.0 | 1062.8 | 1062.8 |

Table 28

| Product name | Grade | CBR (Base ML46) | CBR (Base ML52) |
|---|---|---|---|
|  | Load Coconut oil | 21.5 | 21.5 |
| CBR Mooney viscosity | $ML_{1+4}$,100 | 23.0 | 26.5 |

5-8-2. Productive Mixing (Secondary Compound)

The sheets of the primary compounds obtained from the aforementioned non-productive mixing were then subject to the mixing with vulcanizing agent, most preferably sulfur, and the vulcanizing accelerators by using the standard roll at preferred temperature range of 60-70 °C within 4 minutes. The rubber compounds from the productive mixing (secondary compound) have been pulled in sheets and the samples were then subject to the measurements of Mooney viscosity (ML1+4,100 °C), curing time on a Moving Die Rheometer (MDR) at 160 °C.

The results are summarized in Table 29 below.

Table 29

| Product name |  |  |  |  | CBR(ML46) | CBR-(ML52) |
|---|---|---|---|---|---|---|
|  |  | Oil Type | BR150L ML46 |  | oil 21.5 | oil 21.5 |
|  |  | Oil phr | C75 (Ref) | C76 | C77 | C78 |
| Mooney viscosity; 1 st |  | $ML_{1+4}$, 100 | 57.9 | 46 | 60.1 | 58.5 |
| Mooney viscosity; 2nd |  | ML1+4,100°C | 53.4 | 39.1 | 51.8 | 50.2 |
| Curing rate | Min. T | (dN · m) | 1.6 | 1.1 | 1.5 | 1.4 |
| (160 °C) | Max. T | (dN · m) | 19.8 | 21.0 | 20.4 | 20.0 |
|  | Ts1 | min. | 1.0 | 2.2 | 1.1 | 1.2 |

(continued)

| Product name | | | | | CBR(ML46) | CBR-(ML52) |
|---|---|---|---|---|---|---|
| | | Oil Type | BR150L ML46 | | oil 21.5 | oil 21.5 |
| | | Oil phr | C75 (Ref) | C76 | C77 | C78 |
| | Tc(10) | min. | 2.4 | 4.1 | 3.1 | 3.1 |
| | Tc(90) | min. | 8.41 | 9.10 | 8.43 | 8.43 |

5-8-3. Vulcanization and Properties of the Filler-Filled Vulcanizates

The secondary filler-filled rubber compounds obtained from the productive mixing were processed in the mold pressing at 150 °C according the curing time observed by a MDR as already mentioned (t90x2). The rubber vulcanizates in various forms of the specimens were then subject to the measurements of the viscoelastic property during the temperature sweep, tensile strength, hardness, specific gravity, tear resistance, rebound resilience, abrasion resistance, and compression set.

The results are summarized in Table 30 below.

Table 30

| Product name | | | | | CBR(ML46) | CBR-(ML52) |
|---|---|---|---|---|---|---|
| | | Oil Type | BR150L ML46 | | oil 21.5 | oil 21.5 |
| | | Oil phr | C75 (Ref) | C76 | C77 | C78 |
| Hardness | Type A | | 76 | 75 | 76 | 76 |
| Specific Gravity | | - | 1.189 | 1.189 | 1.189 | 1.189 |
| 100% Modulus | | kg/cm$^2$ | 32 | 34 | 34 | 34 |
| 200% Modulus | | kg/cm$^2$ | 63 | 66 | 66 | 67 |
| 300% Modulus | | kg/cm$^2$ | 99 | 105 | 104 | 106 |
| Tensile strength | | kg/cm$^2$ | 141 | 134 | 140 | 141 |
| Elongation | | % | 416 | 378 | 400 | 392 |
| Tear resistance | | kg/cm | 61 | 66 | 66 | 64 |
| Rebound | BS | % | 41.4 | 44.3 | 42.9 | 42.9 |
| vs Sunthene | | Index | 100.0 | 107.0 | 103.5 | 103.5 |
| Lambourn Abrasion | | (% vs sunthene) | | | | |
| @ 20% slip rate | | | 100.0 | 94.8 | 117.8 | 110.6 |
| @ 40% slip rate | | | 100.0 | 92.3 | 114.0 | 113.9 |
| Heat Build UP: | ⊿T | °C | 25.3 | 22.4 | 24.9 | 23.6 |
| | vs Sunthene | Index | 100 | 113 | 101 | 107 |
| | PS | % | 37.9 | 29.7 | 35.6 | 37.4 |
| Viscoelasticity | | | | | | |
| -20°C | | | | | | |
| E' (MPa) | | | 105.4 | 151.8 | 105.4 | 104.0 |
| E" (MPa) | | | 11.5 | 21.1 | 13.3 | 12.8 |
| E* (MPa) | | | 106.0 | 153.2 | 106.2 | 104.8 |
| tand | | | 0.109 | 0.139 | 0.126 | 0.123 |
| Index (vs Sunthene) | | | 100 | 127 | 115 | 113 |

(continued)

| 0°C | | | | | | |
|---|---|---|---|---|---|---|
| E' (MPa) | | | 82.9 | 90.0 | 76.4 | 76.7 |
| E" (MPa) | | | 9.2 | 13.0 | 9.5 | 9.2 |
| E* (MPa) | | | 83.4 | 90.9 | 77.0 | 77.3 |
| tand | | | 0.112 | 0.144 | 0.124 | 0.119 |
| Index (vs Sunthene) | | | 100 | 129 | 111 | 107 |
| 60°C | | | | | | |
| E' (MPa) | | | 49.5 | 36.6 | 43.1 | 43.1 |
| E" (MPa) | | | 6.7 | 5.9 | 6.7 | 6.5 |
| E* (MPa) | | | 49.9 | 37.1 | 43.6 | 43.6 |
| tand | | | 0.136 | 0.162 | 0.156 | 0.1517 |
| Index (vs Sunthene) | | | 100 | 84 | 88 | 90 |

As shown in Table 30, the physical properties are generally improved by using coconut oil and coconut oil extended rubber compared to the cases where petroleum oil is used instead or the cases where coconut oil is not used.

5-8-4. Payne Effect

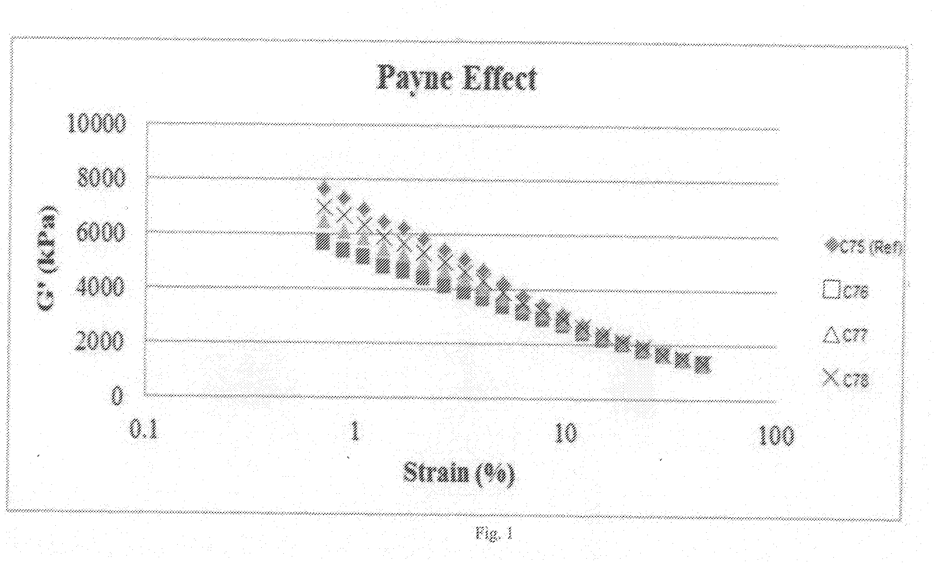

The Payne effect was measured after vulcanization of rubber specimens by using Alpha Technology RPA2000. The vulcanization process was done at 160°C, 30 minutes, then; temperature was decreased to 55°C. Vulcanized rubber specimens was measured the Payne effect under condition of temperature 55°C, frequency 1.667 Hz, strain 0.7-45%. The rubber compound characteristic such as storage modulus (G'), loss modulus (G"), and tan delta (tan$\delta$) was measured and analyzed.
The results are shown in Figure 1. As shown in Figure 1, it has been found that C76-78 shows better performance than C75. It has also been found that C76 shows better performance than C77 and C78.

5-9. The effect of natural oil types on physical properties of SBR/BR blends silica compound

Preparation and analysis have been done in the same way as in the section 5-8. All the data are summarized in Tables 31, 32, 33 and 34 below.

Table 31

| Oil types | C79 (CRef) | C80 | C81 (Ref) | C82 | C83 (Ref) | C84 (Ref) | C85 (Ref) | C86 (Ref) | C87 (Ref) | C88 (Ref) | C89 (Ref) | C90 (Ref) | C91 (Ref) |
|---|---|---|---|---|---|---|---|---|---|---|---|---|---|
| Various oil types recipe | | | | | | | | | | | | | |
| S-SBR1205 | 70 | 70 | | | | | | | | | | | |
| E-SBR1502 | | | 70 | 70 | 70 | 70 | 70 | 70 | 70 | 70 | 70 | 70 | 70 |
| BR150L | 30 | 30 | 30 | 30 | 30 | 30 | 30 | 30 | 30 | 30 | 30 | 30 | 30 |
| Silica (VN3) powder | 75 | 75 | 75 | 75 | 75 | 75 | 75 | 75 | 75 | 75 | 75 | 75 | 75 |
| Si69 | 6 | 6 | 6 | 6 | 6 | 6 | 6 | 6 | 6 | 6 | 6 | 6 | 6 |
| Sunthene oil 4240 | 21.5 | | 21.5 | | | | | | | | | | |
| Coconut FFA 7% | | 21.5 | | 21.5 | | | | | | | | | |
| Soybean oil | | | | | 21.5 | | | | | | | | |
| Palm oil | | | | | | 21.5 | | | | | | | |
| Corn oil | | | | | | | 21.5 | | | | | | |
| Rice Bran oil (Oryzanol 2.500 ppm) | | | | | | | | 21.5 | | | | | |
| Rice Bran oil (Oryzanol 6.000 ppm) | | | | | | | | | 21.5 | | | | |
| Sesame oil | | | | | | | | | | 21.5 | | | |
| Olive oil | | | | | | | | | | | 21.5 | | |
| Sun Flower | | | | | | | | | | | | 21.5 | |
| Canola oil | | | | | | | | | | | | | 21.5 |
| ZnO | 3 | | 3 | | 3 | 3 | 3 | 3 | 3 | 3 | 3 | 3 | 3 |
| St Acid | 1 | 1 | 1 | 1 | 1 | 1 | 1 | 1 | 1 | 1 | 1 | 1 | 1 |

(continued)

| Oil types | C79 CRef) | C80 | C81 (Ref) | C82 | C83 (Ref) | C84 (Ref) | C85 (Ref) | C86 (Ref) | C87 (Ref) | C88 (Ref) | C89 (Ref) | C90 (Ref) | C91 (Ref) |
|---|---|---|---|---|---|---|---|---|---|---|---|---|---|
| AO.6C | 1 | 1 | 1 | 1 | 1 | 1 | 1 | 1 | 1 | 1 | 1 | 1 | 1 |
|  | 207.5 | 207.5 | 207.5 | 207.5 | 207.5 | 207.5 | 207.5 | 207.5 | 207.5 | 207.5 | 207.5 | 207.5 | 207.5 |
|  |  |  |  |  |  |  |  |  |  |  |  |  |  |
|  |  |  |  |  |  |  |  |  |  |  |  |  |  |
| CBS | 1.7 | 1.7 | 1.7 | 1.7 | 1.7 | 1.7 | 1.7 | 1.7 | 1.7 | 1.7 | 1.7 | 1.7 | 1.7 |
| DPG |  |  | 2 |  | 2 | 2 | 2 | 2 | 2 | 2 | 2 | 2 | 2 |
| Sulfur | 1.4 | 1.4 | 1.4 | 1.4 | 1.4 | 1.4 | 1.4 | 1.4 | 1.4 | 1.4 | 1.4 | 1.4 | 1.4 |
| Total | 212.6 | 212.6 | 212.6 | 212.6 | 212.6 | 212.6 | 212.6 | 212.6 | 212.6 | 212.6 | 212.6 | 212.6 | 212.6 |

Table 32

| | C79 (Ref) | C80 | C81 (Ref) | C82 | C83 (Ref) | C84 (Ref) | C85 (Ref) | C86 (Ref) | C87 (Ref) | C88 (Ref) | C89 (Ref) | C90 (Ref) | C91 (Ref) |
|---|---|---|---|---|---|---|---|---|---|---|---|---|---|
| SSBR-1205 | 420 | 420 | | | | | | | | | | | |
| E-SBR1502 | | | 420 | 420 | 420 | 420 | 420 | 420 | 420 | 420 | 420 | 420 | 420 |
| BR150L | 180 | 180 | 180 | 180 | 180 | 180 | 180 | 180 | 180 | 180 | 180 | 180 | 180 |
| Silica (VN3) powder | 450 | 450 | 450 | 450 | 450 | 450 | 450 | 450 | 450 | 450 | 450 | 450 | 450 |
| Si69 | 36 | 36 | 36 | 36 | 36 | 36 | 36 | 36 | 36 | 36 | 36 | 36 | 36 |
| Sunthene oil 4240 | 129 | | 129 | | | | | | | | | | |
| Coconut FFA 7% | | 129 | | 129 | | | | | | | | | |
| Soybean oil | | | | | 129 | | | | | | | | |
| Palm oil | | | | | | 129 | | | | | | | |
| Com oil | | | | | | | 129 | | | | | | |
| Rice Bran oil (Oryzanol 2,500 ppm) | | | | | | | | 129 | | | | | |
| Rice Bran oil (Oryzanol 6,000 ppm) | | | | | | | | | 129 | | | | |
| Sesame oil | | | | | | | | | | 129 | | | |
| Olive oil | | | | | | | | | | | 129 | | |
| Sun Flower | | | | | | | | | | | | 129 | |
| Canola oil | | | | | | | | | | | | | 129 |
| ZnO | 18 | 18 | 18 | 18 | 18 | 18 | 18 | 18 | 18 | 18 | 18 | 18 | 18 |
| St Acid | 6 | 6 | 6 | 6 | 6 | 6 | 6 | 6 | 6 | 6 | 6 | 6 | 6 |
| AO.6C | 6 | 6 | 6 | 6 | 6 | 6 | 6 | 6 | 6 | 6 | 6 | 6 | 6 |
| | 1245 | 1245 | 1245 | 1245 | 1245 | 1245 | 1245 | 1245 | 1245 | 1245 | 1245 | 1245 | 1245 |

EP 3 262 111 B1

(continued)

| | C79 (Ref) | C80 | C81 (Ref) | C82 | C83 (Ref) | C84 (Ref) | C85 (Ref) | C86 (Ref) | C87 (Ref) | C88 (Ref) | C89 (Ref) | C90 (Ref) | C91 (Ref) |
|---|---|---|---|---|---|---|---|---|---|---|---|---|---|
| | | | | | | | | | | | | | |
| | 1037.5 | 1037.5 | 1037.5 | 1037.5 | 1037.5 | 1037.5 | 1037.5 | 1037.5 | 1037.5 | 1037.5 | 1037.5 | 1037.5 | 1037.5 |
| CBS | 8.5 | 8.5 | 8.5 | 8.5 | 8.5 | 8.5 | 8.5 | 8.5 | 8.5 | 8.5 | 8.5 | 8.5 | 8.5 |
| DPG | 10 | 10 | 10 | 10 | 10 | 10 | 10 | 10 | 10 | 10 | 10 | 10 | 10 |
| Sulfur | 7 | 7 | 7 | 7 | 7 | 7 | 7 | 7 | 7 | 7 | 7 | 7 | 7 |
| Total | 1063.0 | 1063.0 | 1063.0 | 1063.0 | 1063.0 | 1063.0 | 1063.0 | 1063.0 | 1063.0 | 1063.0 | 1063.0 | 1063.0 | 1063.0 |

Table 33

| Product name | | Oil Type | C79 (Ref) | C80 | CB1 (Ref) | C82 | C83 (Ref) | C84 (Ref) | C85 (Ref) | C86 (Ref) | C87 (Ref) | C88 (Ref) | C89 (Ref) | C90 (Ref) | C91 (Ref) |
|---|---|---|---|---|---|---|---|---|---|---|---|---|---|---|---|
| | | | SunT-oil | Co-oil | SunT-oil | Co-oil | Soy-oil | Palm-oil | Corn-oil | Ri6000-Oil | Ri2500-Oil | Se-oil | Ol-oil | SunF-oil | Ca-oil |
| Mooney viscosity: 1st | | $ML_{1-4}\cdot100$ | 59.9 | 45.4 | 67.9 | 56.1 | 61.4 | 58.9 | 61.1 | 59.6 | 61.4 | 61.8 | 62.9 | 65.0 | 64.3 |
| Mooney viscosity: 2nd | | ML1+4.100°C | 51.2 | 36.4 | 56.9 | 48.5 | 53.1 | 55.8 | 53.8 | 52.5 | 53.9 | 53.3 | 55.0 | 54.8 | 55.3 |
| Curing rate | Min. T | (dN·m) | 1.4 | 0.9 | 1.7 | 1.5 | 1.7 | 1.6 | 1.6 | 1.6 | 1.6 | 1.7 | 1.7 | 1.8 | 1.8 |
| (160 °C) | Max. T | (dN·m) | 19.0 | 20.6 | 21.8 | 21.7 | 19.4 | 20.6 | 19.9 | 20.2 | 20.0 | 19.7 | 20.7 | 19.5 | 19.9 |
| | Ts1 | min. | 1.2 | 1.5 | 1.5 | 1.5 | 1.3 | 1.4 | 1.3 | 1.3 | 1.3 | 1.4 | 1.3 | 1.3 | 1.3 |
| | To(10) | min. | 2.2 | 2.8 | 3.0 | 2.5 | 2.3 | 2.4 | 2.3 | 2.3 | 2.3 | 2.3 | 2.4 | 2.2 | 2.3 |
| | To(90) | min. | 7.28 | 7.41 | 8.34 | 7.22 | 7.21 | 7.35 | 7.33 | 7.13 | 7.29 | 7.32 | 7.53 | 7.17 | 7.01 |

EP 3 262 111 B1

EP 3 262 111 B1

Table 34

| Product name | | | C79 (Ref) | C80 | C81 (Ref) | C82 | C83 (Ref) | C84 (Ref) | C85 (Ref) | C86 (Ref) | C87 (Ref) | C88 (Ref) | C89 (Ref) | C90 (Ref) | C91 (Ref) |
|---|---|---|---|---|---|---|---|---|---|---|---|---|---|---|---|
| | | Oil Type | SunT-oil | Co-oil | SunT-oil | Co-oil | Soy-oil | Palm-oil | Corn-oil | Ri6000-Oil | Ri2500-Oil | Se-oil | Ol-oil | SunF-oil | Ca-oil |
| Hardness | Type A | | 77 | 78 | 69 | 70 | 67 | 68 | 66 | 68 | 68 | 67 | 68 | 67 | 67 |
| Specific Gravity | | - | 1.186 | 1.185 | 1.187 | 1.187 | 1.187 | 1.186 | 1.188 | 1.187 | 1.188 | 1.189 | 1.188 | 1.189 | 1.188 |
| 100% Modulus | | kg/cm$^2$ | 33 | 34 | 24 | 26 | 20 | 22 | 20 | 22 | 21 | 20 | 22 | 20 | 21 |
| 200% Modulus | | kg/cm$^2$ | 65 | 68 | 59 | 62 | 43 | 51 | 46 | 48 | 46 | 45 | 50 | 43 | 47 |
| 300% Modulus | | kg/cm$^2$ | 101 | 110 | 113 | 114 | 82 | 97 | 87 | 90 | 89 | 86 | 95 | 83 | 91 |
| Tensile strength | | kg/cm$^2$ | 150 | 154 | 161 | 154 | 217 | 172 | 187 | 189 | 185 | 179 | 183 | 190 | 199 |
| Elongation | | % | 421 | 396 | 376 | 362 | 578 | 444 | 501 | 494 | 488 | 485 | 463 | 513 | 505 |
| Tear resistance | | kg/cm | 62 | 62 | 69 | 61 | 70 | 66 | 69 | 67 | 62 | 69 | 65 | 65 | 65 |
| Rebound | BS | % | 32.0 | 41.4 | 50.0 | 52.0 | 48.9 | 49.8 | 49.8 | 48.9 | 50.4 | 47.3 | 48.9 | 48.9 | 51.3 |
| vs Sunthene | | | 100.0 | 129.4 | 100.0 | 104.0 | 97.8 | 99.6 | 99.6 | 97.8 | 100.8 | 94.6 | 97.8 | 97.8 | 102.6 |
| Akron Abrasion | | cc loss | 0.142 | 0.112 | 0.151 | 0.134 | 0.188 | 0.141 | 0.170 | 0.168 | 0.142 | 0.165 | 0.140 | 0.164 | 0.162 |
| vs Sunthene | | | 100.0 | 126.8 | 100.0 | 112.7 | 80.3 | 107.1 | 88.8 | 89.9 | 106.3 | 91.5 | 107.9 | 92.1 | 93.2 |
| Compression Set | | % | 44.2 | 31.2 | 21.6 | 23.9 | 25.7 | 25.6 | 25.5 | 23.3 | 23.4 | 25.4 | 26.5 | 25.4 | 25.1 |
| vs Sunthene | | | 100.0 | 141.7 | 100.0 | 90.4 | 84.0 | 84.4 | 84.7 | 92.7 | 92.3 | 85.0 | 81.5 | 85.0 | 86.1 |
| Din Abrasion | | cc loss | 115 | 109 | 106 | 103 | 92 | 98 | 96 | 100 | 98 | 96 | 101 | 96 | 97 |
| Cut Growth Resistance | Stroke | Kcycle | 40.0 | 20.0 | 45.0 | 76.7 | 65.0 | 33.3 | 50.7 | 43.3 | 38.3 | 52.0 | 26.7 | 52.5 | 32.5 |
| (ASTM D813: 2-15 mm) | | | | | | | | | | | | | | | |
| 57 mm | | Index | 100 | 50 | 100 | 170 | 144 | 74 | 113 | 96 | 85 | 116 | 59 | 117 | 72 |
| Heat Build Up | DT | (℃) | 40.0 | 40.0 | 25.0 | 21.0 | 33.0 | 26.0 | 32.0 | 28.0 | 29.0 | 31.0 | 27.0 | 32.0 | 31.0 |
| | PS | % | 35.5 | 26.8 | 10.2 | 6.4 | 14.8 | 9.6 | 13.3 | 11.6 | 11.5 | 12.4 | 10.7 | 14.8 | 13.2 |

(continued)

| Viscoelasticity | | | | | | | | | | | | | | |
|---|---|---|---|---|---|---|---|---|---|---|---|---|---|---|
| -20°C | | | | | | | | | | | | | | |
| E'(MPa) | | | 105.3 | 155.6 | 42.8 | 82.4 | 36.6 | 51.2 | 36.4 | 39.4 | 37.8 | N/A | N/A | N/A | N/A |
| E" (MPa) | | | 14.0 | 22.5 | 10.3 | 15.9 | 7.7 | 11.2 | 7.7 | 8.5 | 8.3 | N/A | N/A | N/A | N/A |
| E* (MPa) | | | 106.2 | 157.2 | 44.0 | 83.9 | 37.4 | 52.4 | 37.2 | 40.3 | 38.7 | N/A | N/A | N/A | N/A |
| tand | | | 0.133 | 0.145 | 0.241 | 0.193 | 0.211 | 0.218 | 0.211 | 0.215 | 0.220 | N/A | N/A | N/A | N/A |
| Index (vs Sunthene) | | | 100 | 109 | 100 | 80 | 88 | 91 | 88 | 89 | 91 | N/A | N/A | N/A | N/A |
| 0°C | | | | | | | | | | | | | | |
| E'(MPa) | | | 81.0 | 89.1 | 30.2 | 47.8 | 27.2 | 28.1 | 27.0 | 27.4 | 26.4 | N/A | N/A | N/A | N/A |
| E" (MPa) | | | 11.5 | 14.4 | 5.2 | 8.8 | 4.9 | 5.2 | 4.9 | 4.9 | 4.8 | N/A | N/A | N/A | N/A |
| E* (MPa) | | | 81.79 | 90.26 | 30.62 | 48.57 | 27.63 | 28.56 | 27.40 | 27.84 | 26.82 | N/A | N/A | N/A | N/A |
| tand | | | 0.142 | 0.161 | 0.173 | 0.183 | 0.179 | 0.186 | 0.180 | 0.179 | 0.181 | N/A | N/A | N/A | N/A |
| Index (vs Sunthene) | | | 100 | 114 | 100 | 106 | 104 | 107 | 104 | 104 | 105 | N/A | N/A | N/A | N/A |
| 60°C | | | | | | | | | | | | | | |
| E'(MPa) | | | 52.3 | 35.4 | 19.7 | 19.7 | 18.8 | 18.7 | 18.9 | 19.6 | 18.4 | N/A | N/A | N/A | N/A |
| E" (MPa) | | | 7.4 | 6.5 | 2.4 | 2.4 | 2.5 | 2.3 | 2.4 | 2.4 | 2.3 | N/A | N/A | N/A | N/A |
| E* (MPa) | | | 52.8 | 36.0 | 19.8 | 19.9 | 18.9 | 18.8 | 19.1 | 19.7 | 18.5 | N/A | N/A | N/A | N/A |
| tand | | | 0.142 | 0.184 | 0.121 | 0.123 | 0.133 | 0.120 | 0.126 | 0.123 | 0.123 | N/A | N/A | N/A | N/A |
| Index (vs Sunthene) | | | 100 | 77 | 100 | 99 | 91 | 101 | 96 | 99 | 98 | N/A | N/A | N/A | N/A |

As shown in Table 34, the physical properties are generally improved by using coconut oil compared to the cases where other types of oils are used instead. In addition, S-SBR1205 compound system showed the better improvement of physical properties than E-SBR compound system.

5-10. The comparison of physical properties between coconut oil extended BRs (CBRs), which have various ML viscosity of BR matrix and oil contents

Preparation and analysis have been done in the same way as in the section 5-8. All the data are summarized in Tables 35, 36, 37, 38 and 39 below.

Table 35

| | C92 (Ref) | C93 | C94 | C95 | C96 | C97 | C98 | C99 | C100 |
|---|---|---|---|---|---|---|---|---|---|
| E-SBR1502 | 70 | 70 | 70 | 70 | 70 | 70 | 70 | 70 | 70 |
| BR150L | 30 | 30 | | | | | | | |
| BR150L High ML (ML=52) | | | 30 | | | | | | |
| High ML matrix (ML = 70) | | | | 30 | | | | | |
| 150L-oil extended 21.5 | | | | | 36.45 | | | | |
| 150L High ML-oil extended 21.5 | | | | | | 36.45 | | | |
| 150L High ML-oil extended 30 | | | | | | | 39 | | |
| High ML matrix (ML=70)-oil extended 21.5 | | | | | | | | 36.45 | |
| High ML matrix (ML=70)-oil extended 30 | | | | | | | | | 39 |
| Silica (VN3) powder | 75 | 75 | 75 | 75 | 75 | 75 | 75 | 75 | 75 |
| Si69 | 6 | 6 | 6 | 6 | 6 | 6 | 6 | 6 | 6 |
| Sunthene oil 4240 | 21.5 | | | | 15.05 | 15.05 | 12.5 | 15.05 | 12.5 |
| Coconut FFA 7% | | 21.5 | 21.5 | 21.5 | | | | | |
| ZnO | 3 | 3 | 3 | 3 | 3 | 3 | 3 | 3 | 3 |
| St Acid | 1 | 1 | 1 | 1 | 1 | 1 | 1 | 1 | 1 |
| AO.6C | 1 | 1 | 1 | 1 | 1 | 1 | 1 | 1 | 1 |
| | 207.5 | 207.5 | 207.5 | 207.5 | 207.5 | 207.5 | 207.5 | 207.5 | 207.5 |
| | | | | | | | | | |
| | | | | | | | | | |
| CBS | 1.7 | 1.7 | 1.7 | 1.7 | 1.7 | 1.7 | 1.7 | 1.7 | 1.7 |
| DPG | 2 | 2 | 2 | 2 | 2 | 2 | 2 | 2 | 2 |
| Sulfur | 1.4 | 1.4 | 1.4 | 1.4 | 1.4 | 1.4 | 1.4 | 1.4 | 1.4 |
| Total | 212.6 | 212.6 | 212.6 | 212.6 | 212.6 | 212.6 | 212.6 | 212.6 | 212.6 |

Table 36

| | C92 (Ref) | C93 | C94 | C95 | C96 | C97 | C98 | C99 | C100 |
|---|---|---|---|---|---|---|---|---|---|
| E-SBR1502 | 420 | 420 | 420 | 420 | 420 | 420 | 420 | 420 | 420 |

(continued)

| | C92 (Ref) | C93 | C94 | C95 | C96 | C97 | C98 | C99 | C100 |
|---|---|---|---|---|---|---|---|---|---|
| BR150L | 180 | 180 | | | | | | | |
| BR150L High ML (ML=52) | | | 180 | | | | | | |
| High ML matrix (ML = 70) | | | | 180 | | | | | |
| 150L-oil extended 21.5 | | | | | 218.7 | | | | |
| 150L High ML-oil extended 21.5 | | | | | | 218.7 | | | |
| 150L High ML-oil extended 30 | | | | | | | 234 | | |
| High ML matrix (ML=70)-oil extended 21.5 | | | | | | | | 218.7 | |
| High ML matrix (ML=70)-oil extended 30 | | | | | | | | | 234 |
| Silica (VN3) powder | 450 | 450 | 450 | 450 | 450 | 450 | 450 | 450 | 450 |
| Si69 | 36 | 36 | 36 | 36 | 36 | 36 | 36 | 36 | 36 |
| Sunthene oil 4240 | 129 | | | | 90.3 | 90.3 | 75 | 90.3 | 75 |
| Coconut FFA 7% | | 129 | 129 | 129 | | | | | |
| ZnO | 18 | 18 | 18 | 18 | 18 | 18 | 18 | 18 | 18 |
| St Acid | 6 | 6 | 6 | 6 | 6 | 6 | 6 | 6 | 6 |
| AO.6C | 6 | 6 | 6 | 6 | 6 | 6 | 6 | 6 | 6 |
| | 1245 | 1245 | 1245 | 1245 | 1245 | 1245 | 1245 | 1245 | 1245 |
| | | | | | | | | | |
| | 1037.5 | 1037.5 | 1037.5 | 1037.5 | 1037.5 | 1037.5 | 1037.5 | 1037.5 | 1037.5 |
| CBS | 8.5 | 8.5 | 8.5 | 8.5 | 8.5 | 8.5 | 8.5 | 8.5 | 8.5 |
| DPG | 10 | 10 | 10 | 10 | 10 | 10 | 10 | 10 | 10 |
| Sulfur | 7 | 7 | 7 | 7 | 7 | 7 | 7 | 7 | 7 |
| Total | 1063.0 | 1063.0 | 1063.0 | 1063.0 | 1063.0 | 1063.0 | 1063.0 | 1063.0 | 11063.0 |

Table 37

| Product name | Grade | BR150L | | BR150L(ML=52) | | | High ML matrix (ML=70) | | |
|---|---|---|---|---|---|---|---|---|---|
| | Coconut oil(phr) | 0 | 21.5 | 0 | 21.5 | 30 | 0 | 21.5 | 30 |
| Mooney viscosity | $ML_{1+4}$,100 | 42.6 | 22.6 | 50.0 | 25.6 | 20.0 | 70.0 | 38.0 | 31.5 |

Table 38

| Product name | | Oil Type | C92 (Ref) Sunthene | C93 Coconut | C94 Coconut | C95 Coconut | C96 Coconut | C97 Coconut | C98 Coconut | C99 Coconut | C100 Coconut |
|---|---|---|---|---|---|---|---|---|---|---|---|---|
| Mooney viscosity; 1st | | $ML_{1+4}, 100$ | 63.6 | 50.9 | 50.1 | 58.0 | 57.9 | 56.8 | 57.5 | 65.4 | 64.7 |
| Mooney viscosity; 2nd | | ML1+4,100°C | 54.7 | 44.8 | 43.6 | 52.1 | 50.6 | 49.9 | 50.3 | 56.9 | 56.6 |
| Curing rate | Min. T | $(dN \cdot m)$ | 1.7 | 1.4 | 1.4 | 1.5 | 1.5 | 1.4 | 1.5 | 1.7 | 1.7 |
| (160 °C) | Max. T | $(dN \cdot m)$ | 21.7 | 21.2 | 21.3 | 21.5 | 21.4 | 21.2 | 21.0 | 21.3 | 21.3 |
| | Ts1 | min. | 2.0 | 2.2 | 2.2 | 2.1 | 2.0 | 2.1 | 2.1 | 1.6 | 2.0 |
| | Tc(10) | min. | 3.2 | 3.2 | 3.2 | 3.2 | 3.1 | 3.1 | 3.1 | 3.1 | 3.1 |
| | Tc(90) | min. | 9.11 | 8.36 | 8.50 | 8.50 | 8.52 | 8.53 | 8.44 | 8.50 | 8.50 |

Table 39

| Product name | | | C92 (Ref) | C93 | C94 | C95 | C96 | C97 | C98 | C99 | C100 |
|---|---|---|---|---|---|---|---|---|---|---|---|---|
| | | Oil Type | Sunthene | Coconut | Coconut | Coconut | Coconut | Coconut | Coconut | Coconut | Coconut |
| Hardness | Type A | | 67 | 69 | 69 | 69 | 68 | 66 | 67 | 67 | 67 |
| Specific Gravity | | - | 1.187 | 1.188 | 1.189 | 1.189 | 1.188 | 1.186 | 1.187 | 1.188 | 1.188 |
| 100% Modulus | | kg/cm$^2$ | 24 | 25 | 26 | 27 | 24 | 22 | 25 | 24 | 27 |
| 200% Modulus | | kg/cm$^2$ | 61 | 61 | 65 | 67 | 60 | 55 | 61 | 62 | 66 |
| 300% Modulus | | kg/cm$^2$ | 118 | 116 | 121 | 124 | 114 | 107 | 115 | 120 | 124 |
| Tensile strength | | kg/cm$^2$ | 183 | 177 | 162 | 168 | 158 | 170 | 158 | 170 | 175 |
| Elongation | | % | 401 | 406 | 369 | 372 | 378 | 404 | 370 | 380 | 382 |
| Tear resistance | | kg/cm | 68 | 63 | 65 | 65 | 67 | 63 | 62 | 62 | 68 |
| Rebound | BS | % | 52.9 | 52.9 | 52.0 | 53.6 | 53.6 | 52.0 | 53.6 | 52.9 | 54.5 |
| vs Sunthene | | Index | 100.0 | 100.0 | 98.3 | 101.3 | 101.3 | 98.2 | 101.2 | 100.0 | 103.0 |
| Akron Abrasion | | cc loss | 0.156 | 0.130 | 0.141 | 0.131 | 0.140 | 0.137 | 0.144 | 0.130 | 0.136 |
| vs Sunthene | | Index | 100.0 | 120.0 | 110.6 | 119.1 | 111.4 | 113.9 | 108.3 | 120.0 | 114.7 |
| Compression Set | | % | 22.0 | 22.6 | 21.1 | 19.3 | 19.1 | 19.6 | 20.9 | 18.6 | 16.9 |
| vs Sunthene | | Index | 100.0 | 97.3 | 104.3 | 114.0 | 115.2 | 112.2 | 105.3 | 118.3 | 130.2 |

As shown in Table 39, the physical properties are generally improved by using coconut oil compared to the case where other type of oil is used instead. In addition, the higher ML viscosity of BR matrix of coconut oil extended BR showed the better improvement of physical properties than the lower ML viscosity of BR matrix.

5-11. The comparison of physical properties between coconut oil extended BR (CBR) and other types of BRs on silica compound recipe with E-SBR and S-SBR and fine grade of silica.

Preparation and analysis have been done in the same way as in the section 5-8. All the data are summarized in Tables 40, 41, 42, 43 and 44 below.

Table 40

|  | C101 (Ref) | C102 (Ref) | C103 (Ref) | C104 (Ref) | C105 (Ref) | C106 (Ref) | C107 (Ref) | C108 |
|---|---|---|---|---|---|---|---|---|
| E-SBR1502 | 70 | | | | | | | |
| S-SBR E15 | | 70 | 70 | 70 | 70 | 70 | 70 | 70 |
| BR150L | 30 | 30 | | | | | | |
| BR360L | | | 30 | | | | | |
| CB24 | | | | 30 | | | | |
| NEOCIS-BR040 | | | | | 30 | | | |
| LG-1208 | | | | | | 30 | | |
| High ML CBR matrix (ML = 70) | | | | | | | 30 | |
| CBR215 (Coconut 21.5 phr) | | | | | | | | 36.45 |
| Ultrasil7000GR | 75 | 75 | 75 | 75 | 75 | 75 | 75 | 75 |
| Si69 | 6 | 6 | 6 | 6 | 6 | 6 | 6 | 6 |
| Sunthene oil 4240 | 21.5 | 21.5 | 21.5 | 21.5 | 21.5 | 21.5 | 21.5 | 15.05 |
| ZnO | 3 | 3 | 3 | 3 | 3 | 3 | 3 | 3 |
| St Acid | 1 | 1 | 1 | 1 | 1 | 1 | 1 | 1 |
| AO.6C | 1 | 1 | 1 | 1 | 1 | 1 | 1 | 1 |
|  | 207.5 | 207.5 | 207.5 | 207.5 | 207.5 | 207.5 | 207.5 | 207.5 |
|  | | | | | | | | |
|  | | | | | | | | |
| CBS | 1.7 | 1.7 | 1.7 | 1.7 | 1.7 | 1.7 | 1.7 | 1.7 |
| DPG | 2 | 2 | 2 | 2 | 2 | 2 | 2 | 2 |
| Sulfur | 1.4 | 1.4 | 1.4 | 1.4 | 1.4 | 1.4 | 1.4 | 1.4 |
| Total | 212.6 | 212.6 | 212.6 | 212.6 | 212.6 | 212.6 | 212.6 | 212.6 |

Table 41

|  | C101 (Ref) | C102 (Ref) | C103 (Ref) | C104 (Ref) | C105 (Ref) | C106 (Ref) | C107 (Ref) | C108 |
|---|---|---|---|---|---|---|---|---|
| E-SBR1502 | 420 | | | | | | | |
| S-SBR E15 | | 420 | 420 | 420 | 420 | 420 | 420 | 420 |
| BR150L | 180 | 180 | | | | | | |

(continued)

| | C101 (Ref) | C102 (Ref) | C103 (Ref) | C104 (Ref) | C105 (Ref) | C106 (Ref) | C107 (Ref) | C108 |
|---|---|---|---|---|---|---|---|---|
| BR360L | | | 180 | | | | | |
| CB24 | | | | 180 | | | | |
| NEOCIS-BR040 | | | | | 180 | | | |
| LG-1208 | | | | | | 180 | | |
| High ML CBR matrix (ML = 70) | | | | | | | 180 | |
| CBR215 (Coconut 21.5 phr) | | | | | | | | 218.7 |
| Ultrasil7000GR | 450 | 450 | 450 | 450 | 450 | 450 | 450 | 450 |
| Si69 | 36 | 36 | 36 | 36 | 36 | 36 | 36 | 36 |
| Sunthene oil 4240 | 129 | 129 | 129 | 129 | 129 | 129 | 129 | 90.3 |
| ZnO | 18 | 18 | 18 | 18 | 18 | 18 | 18 | 18 |
| St Acid | 6 | 6 | 6 | 6 | 6 | 6 | 6 | 6 |
| AO.6C | 6 | 6 | 6 | 6 | 6 | 6 | 6 | 6 |
| | 1245 | 1245 | 1245 | 1245 | 1245 | 1245 | 1245 | 1245 |
| | | | | | | | | |
| | 1037.5 | 1037.5 | 1037.5 | 1037.5 | 1037.5 | 1037.5 | 1037.5 | 1037.5 |
| CBS | 8.5 | 8.5 | 8.5 | 8.5 | 8.5 | 8.5 | 8.5 | 8.5 |
| DPG | 10 | 10 | 10 | 10 | 10 | 10 | 10 | 10 |
| Sulfur | 7 | 7 | 7 | 7 | 7 | 7 | 7 | 7 |
| Total | 1063.0 | 1063.0 | 1063.0 | 1063.0 | 1063.0 | 1063.0 | 1063.0 | 1063.0 |

Table 42

| Grade name | | | C102 (Ref) BR150L | C103 (Ref) BR360L | C104 (Ref) CB24 | C105 (Ref) BR040 | C106 (Ref) LG1208 | C107 (Ref) HM-BR | C108 HM CBR21.5 |
|---|---|---|---|---|---|---|---|---|---|
| Mooney viscosity | | $ML_{1+4}, 100$ | 42.2 | 48.5 | 43.4 | 44.6 | 47.0 | 74.3 | 40.5 |
| T-cp | | (cps) | 102 | 127.2 | 126.8 | 211.1 | 252.1 | 235.0 | |
| T-cp/ML(1+4) | | | 2.4 | 2.6 | 2.9 | 4.7 | 5.4 | 3.2 | |
| Cis1,4 | | | 98.37 | 98.6 | 96.5 | 96.5 | 98.0 | 98.5 | |
| Vinyl 1,2 | | | 0.8 | 0.8 | 0.4 | 0.4 | 1.1 | 0.8 | |
| Tran 1,2 | | | 0.77 | 0.6 | 3.1 | 3.1 | 0.9 | 0.7 | |
| MWD | Mw | $(10^4)$ | 52.99 | 57 | 46 | 54 | 58 | 74 | |
| | Mn | $(10^4)$ | 21.9 | 23 | 21 | 22 | 16 | 24 | |

(continued)

| Grade name | | | C102 (Ref) | C103 (Ref) | C104 (Ref) | C105 (Ref) | C106 (Ref) | C107 (Ref) | C108 |
|---|---|---|---|---|---|---|---|---|---|
| | | | BR150L | BR360L | CB24 | BR040 | LG1208 | HM-BR | HM CBR21.5 |
| | Mw/Mn | | 2.42 | 2.45 | 2.20 | 2.40 | 3.60 | 3.01 | |

Table 43

| | | | E-SBR1502 | 150L | BR360L | CB24 | BR040 | LG1208 | HM-BR | HM CBR21.5 |
|---|---|---|---|---|---|---|---|---|---|---|
| Product name | | | C101 (Ref) | C102 (Ref) | C103 (Ref) | C104 (Ref) | C105 (Ref) | C106 (Ref) | C107 (Ref) | C108 |
| Mooney viscosity; 1st | | $ML_{1+4}$, 100 | 87.2 | 111 | 112 | 111.7 | 112.8 | 107.3 | 125.1 | 115.7 |
| Mooney viscosity; 2nd | | ML1+4,100°C | 67.5 | 98.0 | 95.3 | 92.5 | 92.9 | 89.4 | 101.6 | 93.9 |
| Curing rate | Min. T | (dN · m) | 2.1 | 3.6 | 3.5 | 3.4 | 3.3 | 3.2 | 3.7 | 3.4 |
| (150 °C) | Max. T | (dN · m) | 19.9 | 20.3 | 21.1 | 20.4 | 20.4 | 20.2 | 21.4 | 21.8 |
| | Ts1 | min. | 2.1 | 1.1 | 1.0 | 1.1 | 1.1 | 1.0 | 0.6 | 0.6 |
| | Tc(10) | min. | 3.1 | 1.3 | 1.3 | 1.4 | 1.4 | 1.3 | 1.3 | 1.4 |
| | Tc(90) | min. | 8.42 | 11.27 | 10.56 | 11.00 | 11.59 | 10.55 | 12.04 | 10.43 |

Table 44

| Product name | | | E-SBR1502 | 150L | BR360L | CB24 | BR040 | LG1208 | HM-BR | HM CBR21.5 |
|---|---|---|---|---|---|---|---|---|---|---|
| | | | C101 (Ref) | C102 (Ref) | C103 (Ref) | C104 (Ref) | C105 (Ref) | C106 (Ref) | C107 (Ref) | C108 |
| Hardness | Type A | | 66 | 68 | 69 | 69 | 69 | 69 | 71 | 70 |
| Specific Gravity | | - | 1.187 | 1.189 | 1.189 | 1.190 | 1.190 | 1.188 | 1.189 | 1.190 |
| 100% Modulus | | kg/cm$^2$ | 23 | 29 | 29 | 29 | 28 | 29 | 31 | 29 |
| 200% Modulus | | kg/cm$^2$ | 54 | 72 | 72 | 73 | 68 | 72 | 78 | 72 |
| 300% Modulus | | kg/cm$^2$ | 103 | 137 | 137 | 139 | 129 | 134 | 145 | 137 |
| Tensile strength | | kg/cm$^2$ | 149 | 169 | 151 | 158 | 152 | 151 | 158 | 165 |
| Elongation | | % | 383 | 344 | 320 | 332 | 336 | 325 | 310 | 334 |
| Tear resistance | | kg/cm | 65 | 59 | 58 | 59 | 65 | 60 | 64 | 62 |
| Rebound | BS | % | 48.2 | 50.4 | 55.2 | 55.2 | 56.2 | 53.6 | 56.2 | 58.5 |
| vs Sunthene | | Index | 100 | 105 | 114 | 114 | 116 | 111 | 116 | 121 |
| Akron Abrasion | | cc loss | 0.140 | 0.052 | 0.051 | 0.046 | 0.051 | 0.045 | 0.049 | 0.055 |
| vs Sunthene | | Index | 37 | 100 | 102 | 113 | 102 | 116 | 106 | 95 |
| Compression Set | | % | 21.8 | 14.4 | 14.2 | 14.1 | 14.8 | 16.8 | 15.3 | 14.6 |
| vs Sunthene | | Index | 66 | 100 | 101 | 102 | 97 | 86 | 94 | 99 |
| Cut Growth Resistance | Stroke | Kcycle | 35 | 36 | 97 | 123 | 72 | 61 | 87 | 233 |
| (ASTM D813 : 2-15 mm) | | | | | | | | | | |
| 57 mm | | Index | 97 | 100 | 269 | 343 | 199 | 169 | 241 | 648 |

60

As shown in Table 44, the physical properties are generally improved by using coconut oil extended BR compared to the case where other types of BRs are used.

5-12. The comparison of physical properties where coconut oil extended BRs (CBRs) with various ML viscosity level we employed

Preparation and analysis have been done in the same way as in the section 5-8. All the data are summarized in Tables 45, 46, 47, 48 and 49 below. Here, CBR50 means the CBR with ML viscosity of around 50 and the same rule applies to CBR60, CBR70, and CBR80. FFA contents for these are 21.5% by mass.

Table 45

|  | C109 (Ref) | C110 (Ref) | C111 | C112 | C113 | C114 |
|---|---|---|---|---|---|---|
| S-SBR E15 | 70 | 70 | 70 | 70 | 70 | 70 |
| BR150L | 30 |  |  |  |  |  |
| CB24 |  | 30 |  |  |  |  |
| CBR50 |  |  | 36.45 |  |  |  |
| CBR60 |  |  |  | 36.45 |  |  |
| CBR70 |  |  |  |  | 36.45 |  |
| CBR80 |  |  |  |  |  | 36.45 |
| Ultrasil 7000GR | 75 | 75 | 75 | 75 | 75 | 75 |
| Si69 | 6 | 6 | 6 | 6 | 6 | 6 |
| Sunthene oil 4240 | 21.5 | 21.5 | 15.05 | 15.05 | 15.05 | 15.05 |
| ZnO | 3 | 3 | 3 | 3 | 3 | 3 |
| stearic acid | 1 | 1 | 1 | 1 | 1 | 1 |
| 6PPD | 1 | 1 | 1 | 1 | 1 | 1 |
|  | 207.5 | 207.5 | 207.5 | 207.5 | 207.5 | 207.5 |
|  |  |  |  |  |  |  |
| Compound | 207.5 | 207.5 | 207.5 | 207.5 | 207.5 | 207.5 |
| CBS | 1.7 | 1.7 | 1.7 | 1.7 | 1.7 | 1.7 |
| DPG | 2.0 | 2.0 | 2.0 | 2.0 | 2.0 | 2.0 |
| sulfur | 1.4 | 1.4 | 1.4 | 1.4 | 1.4 | 1.4 |
|  | 212.6 | 212.6 | 212.6 | 212.6 | 212.6 | 212.6 |

Table 46

|  | C109 (Ref) | C110 (Ref) | C111 | C112 | C113 | C114 |
|---|---|---|---|---|---|---|
| S-SBR E15 | 420 | 420 | 420 | 420 | 420 | 420 |
| BR150L | 180 | 0 | 0 | 0 | 0 | 0 |
| CB24 | 0 | 180 | 0 | 0 | 0 | 0 |
| CBR50 | 0 | 0 | 218.7 | 0 | 0 | 0 |
| CBR60 | 0 | 0 | 0 | 218.7 | 0 | 0 |
| CBR60 | 0 | 0 | 0 | 0 | 218.7 | 0 |
| CBR70 | 0 | 0 | 0 | 0 | 0 | 218.7 |
| Ultrasil 7000GR | 450 | 450 | 450 | 450 | 450 | 450 |

61

(continued)

|  | C109 (Ref) | C110 (Ref) | C111 | C112 | C113 | C114 |
|---|---|---|---|---|---|---|
| Si69 | 36 | 36 | 36 | 36 | 36 | 36 |
| Sunthene oil 4240 | 129 | 129 | 90.3 | 90.3 | 90.3 | 90.3 |
| ZnO | 18 | 18 | 18 | 18 | 18 | 18 |
| stearic acid | 6 | 6 | 6 | 6 | 6 | 6 |
| 6PPD | 6 | 6 | 6 | 6 | 6 | 6 |
|  | 1245 | 1245 | 1245 | 1245 | 1245 | 1245 |
|  |  |  |  |  |  |  |
| Compound | 1037.5 | 1037.5 | 1037.5 | 1037.5 | 1037.5 | 1037.5 |
| CBS | 8.5 | 8.5 | 8.5 | 8.5 | 8.5 | 8.5 |
| GPG | 10.0 | 10.0 | 10.0 | 10.0 | 10.0 | 10.0 |
| sulfur | 7.0 | 7.0 | 7.0 | 7.0 | 7.0 | 7.0 |
|  | 1063 | 1063 | 1063 | 1063 | 1063 | 1063 |

Table 47

| Grade name | | | C109 (Ref) | C110 (Ref) | C111 | C112 | C113 | C114 |
|---|---|---|---|---|---|---|---|---|
|  | | | BR150L | CB24 | CBR50 | CBR60 | CBR70 | CBR80 |
| Mooney viscosity | | $ML_{1+4}$, 100 | 42.2 | 43.4 | 49.6 | 58.7 | 69.0 | 78.0 |
| T-cp | | (cps) | 102.0 | 126.8 | 168.9 | 223.2 | 266.8 | 347.8 |
| T-cp/ML(1+4) | | | 2.4 | 2.9 | 3.4 | 3.8 | 3.9 | 4.5 |
| Cis1,4 | | | 98.4 | 96.5 | 98.6 | 98.2 | 98.6 | 98.7 |
| Vinyl 1,2 | | | 0.8 | 0.4 | 0.7 | 0.8 | 0.7 | 0.6 |
| Tran 1,2 | | | 0.8 | 3.1 | 0.7 | 0.9 | 0.7 | 0.7 |
| MWD | Mw | $(10^4)$ | 53 | 46 | 64 | 67 | 79 | 78 |
|  | Mn | $(10^4)$ | 22 | 21 | 30 | 32 | 35 | 36 |
|  | Mw/Mn | | 2.42 | 2.20 | 2.13 | 2.10 | 2.24 | 2.16 |

Table 48

| Product name | | | C109 (Ref) | C110 (Ref) | C111 | C112 | C113 | C114 |
|---|---|---|---|---|---|---|---|---|
| Grade name | | | BR150L | CB24 | CBR50 | CBR60 | CBR70 | CBR80 |
| Mooney viscosity; 1st | | $ML_{1+4}$, 100 | 109.1 | 108.4 | 106.6 | 112.9 | 115.8 | 116.4 |
| Mooney viscosity; 2nd | | ML1+4,100°C | 92.4 | 91.5 | 84.3 | 88.8 | 90.6 | 91.4 |
| Curing rate | Min. T | (dN · m) | 3.9 | 38 | 3.4 | 3.6 | 3.7 | 3.8 |
| (150 °C) | Max. T | (dN · m) | 22.2 | 22.3 | 23.5 | 23.4 | 24.3 | 24.4 |
|  | Ts1 | min. | 1.0 | 0.6 | 0.6 | 0.6 | 0.5 | 0.5 |
|  | Tc(10) | min. | 1.3 | 1.3 | 1.5 | 1.5 | 1.4 | 1.4 |
|  | Tc(90) | min. | 11.32 | 11.51 | 11.48 | 11.54 | 10.48 | 11.53 |

Table 49

| Product name | | | C109 (Ref) | C110 (Ref) | C111 | C112 | C113 | C114 |
|---|---|---|---|---|---|---|---|---|
| Grade name | | | BR150L | CB24 | CBR50 | CBR60 | CBR70 | CBR80 |
| Hardness | Type A | | 69 | 69 | 69 | 69 | 70 | 71 |
| Specific Gravity | | - | 1.188 | 1.189 | 1.190 | 1.190 | 1.190 | 1.190 |
| 100% Modulus | | kg/cm$^2$ | 30 | 30 | 29 | 30 | 30 | 30 |
| 200% Modulus | | kg/cm$^2$ | 76 | 74 | 72 | 72 | 72 | 71 |
| 300% Modulus | | kg/cm$^2$ | 142 | 139 | 133 | 136 | 134 | 134 |
| Tensile strength | | kg/cm$^2$ | 147 | 155 | 152 | 149 | 158 | 153 |
| Elongation | | % | 308 | 322 | 327 | 318 | 337 | 330 |
| Tear resistance | | kg/cm | 57 | 63 | 62 | 61 | 63 | 62 |
| Rebound | BS | % | 55.2 | 56.2 | 56.8 | 56.8 | 56.8 | 56.8 |
| vs Sunthene | | Index | 100 | 102 | 103 | 103 | 103 | 103 |
| Akron Abrasion | | cc loss | 0.059 | 0.061 | 0.066 | 0.061 | 0.060 | 0.062 |
| vs Sunthene | | Index | 100 | 97 | 89 | 97 | 98 | 95 |
| Compression Set | | % | 15.8 | 15.5 | 15.1 | 14.0 | 14.3 | 14.7 |
| vs Sunthene | | Index | 100 | 102 | 105 | 113 | 110 | 107 |
| Viscoelasticity | | | | | | | | |
| -20°C | | | | | | | | |
| E' (MPa) | | | | 60.2 | 59.9 | 65.2 | 65.7 | 64.6 |
| E" (MPa) | | | | 34.1 | 36.0 | 35.6 | 35.9 | 36.3 |
| E* (MPa) | | | | 69.2 | 69.9 | 74.3 | 74.9 | 74.1 |
| tand | | | | 0.566 | 0.601 | 0.545 | 0.546 | 0.562 |
| Index (vs CB24) | | | | 100 | 106 | 96 | 97 | 99 |
| 0°C | | | | | | | | |
| E' (MPa) | | | | 16.9 | 14.7 | 17.9 | 18.8 | 17.1 |
| E" (MPa) | | | | 4.3 | 3.6 | 4.1 | 4.3 | 4.0 |
| E* (MPa) | | | | 17.4 | 15.1 | 18.3 | 19.3 | 17.6 |
| tand | | | | 0.252 | 0.244 | 0.228 | 0.232 | 0.236 |
| Index (vs Sunthene) | | | | 100 | 97 | 90 | 92 | 93 |
| 60°C | | | | | | | | |
| E' (MPa) | | | | 8.5 | 8.3 | 9.7 | 10.1 | 9.2 |
| E" (MPa) | | | | 0.7 | 0.6 | 0.8 | 0.8 | 0.7 |
| E* (MPa) | | | | 8.5 | 8.3 | 9.8 | 10.1 | 9.3 |
| tand | | | | 0.081 | 0.077 | 0.079 | 0.080 | 0.080 |
| Index (vs Sunthene) | | | | 100 | 105 | 103 | 101 | 101 |

As shown in Table 49, the physical properties are generally improved by using coconut oil extended BR regardless of their Mooney viscosities.

5-13. The effect of coconut oil extended BR on Truck Bus tread formulation with carbon black compound

5-13-1. Non-Productive Mixing (Primary Compound)

During the non-productive mixing, all components except the vulcanizing agent and accelerators were mixed in the standard mixer such as a banbury mixer with initial temperature at 90 °C within 5 minutes mixing time. Firstly, all of diene polymers were added into banbury mixer and mixed for 1 minute, then, all of filler was added into mixer. All of mixtures were mixed in banbury mixer for 2.5 minutes. Then, ram of mixer chamber was opened up for cleaning residue filler at 2.5 minutes of mixing process. The mixing process had proceeded for 5 minutes or temperature reached 170 °C. The mixed compounds were rolled at preferred temperature range of 60-70 °C using the standard roller with nip clearance of 2 millimeter. The samples of the compound sheets were left at room temperature for 1-24 hours. Then, the compound samples were subject to the Mooney viscosity measurement.

The compositions are summarized is Tables 50 and 51 below, the former of which is described in phr and the latter of which is described in grams. The properties of various BRs are summarized in Table 52 below.

Table 50

|  | C 115 (Ref) | C 116 (Ref) | C 117 (Ref) | C 118 (Ref) | C 119 (Ref) | C 120 (Ref) | C 121 (Ref) | C 122 |
|---|---|---|---|---|---|---|---|---|
| CB24 | 25 |  |  |  |  |  |  |  |
| NEODENE-45 |  | 25 |  |  |  |  |  |  |
| NeocisBR040 |  |  | 25 |  |  |  |  |  |
| LG-1208 |  |  |  | 25 |  |  |  |  |
| BR150L |  |  |  |  | 25 |  |  |  |
| BR360L |  |  |  |  |  | 25 |  |  |
| BR230 |  |  |  |  |  |  | 25 |  |
| CBR21.5 |  |  |  |  |  |  |  | 25 |
| NR STR20 (ML = 70) | 75 | 75 | 75 | 75 | 75 | 75 | 75 | 75 |
| SAF-C/B (N234) | 50 | 50 | 50 | 50 | 50 | 50 | 50 | 50 |
| VIVATEC500 | 3 | 3 | 3 | 3 | 3 | 3 | 3 | 3 |
| ZnO | 3 | 3 | 3 | 3 | 3 | 3 | 3 | 3 |
| stearic acid | 2 | 2 | 2 | 2 | 2 | 2 | 2 | 2 |
| 6PPD | 2 | 2 | 2 | 2 | 2 | 2 | 2 | 2 |
|  | 160 | 160 | 160 | 160 | 160 | 160 | 160 | 160 |
|  |  |  |  |  |  |  |  |  |
| Compound | 160 | 160 | 160 | 160 | 160 | 160 | 160 | 160 |
| NS | 1.0 | 1.0 | 1.0 | 1.0 | 1.0 | 1.0 | 1.0 | 1.0 |
| sulfur | 1.5 | 1.5 | 1.5 | 1.5 | 1.5 | 1.5 | 1.5 | 1.5 |
|  | 162.5 | 162.5 | 162.5 | 162.5 | 162.5 | 162.5 | 162.5 | 162.5 |

Table 51

|  | C 115 (Ref) | C 116 (Ref) | C 117 (Ref) | C 118 (Ref) | C 119 (Ref) | C 120 (Ref) | C 121 (Ref) | C 122 |
|---|---|---|---|---|---|---|---|---|
| CB24 | 187.5 | 0 | 0 | 0 | 0 | 0 | 0 | 0 |

(continued)

| | C 115 (Ref) | C 116 (Ref) | C 117 (Ref) | C 118 (Ref) | C 119 (Ref) | C 120 (Ref) | C 121 (Ref) | C 122 |
|---|---|---|---|---|---|---|---|---|
| NEODENE-45 | 0 | 187.5 | 0 | 0 | 0 | 0 | 0 | 0 |
| NeocisBR040 | 0 | 0 | 187.5 | 0 | 0 | 0 | 0 | 0 |
| LG-1208 | 0 | 0 | 0 | 187.5 | 0 | 0 | 0 | 0 |
| BR150L | 0 | 0 | 0 | 0 | 187.5 | 0 | 0 | 0 |
| BR360L | 0 | 0 | 0 | 0 | 0 | 187.5 | 0 | 0 |
| BR230 | 0 | 0 | 0 | 0 | 0 | 0 | 187.5 | 0 |
| CBR21.5 | 0 | 0 | 0 | 0 | 0 | 0 | 0 | 187.5 |
| NR (ML = 70) | 562.5 | 562.5 | 562.5 | 562.5 | 562.5 | 562.5 | 562.5 | 562.5 |
| SAF-C/B (N234) | 375 | 375 | 375 | 375 | 375 | 375 | 375 | 375 |
| VIVATEC500 | 22.5 | 22.5 | 22.5 | 22.5 | 22.5 | 22.5 | 22.5 | 22.5 |
| ZnO | 22.5 | 22.5 | 22.5 | 22.5 | 22.5 | 22.5 | 22.5 | 22.5 |
| stearic acid | 15 | 15 | 15 | 15 | 15 | 15 | 15 | 15 |
| 6PPD | 15 | 15 | 15 | 15 | 15 | 15 | 15 | 15 |
| | 1200 | 1200 | 1200 | 1200 | 1200 | 1200 | 1200 | 1200 |
| | | | | | | | | |
| Compound | 800.0 | 800.0 | 800.0 | 800.0 | 800.0 | 800.0 | 800.0 | 800.0 |
| NS (TBBS) | 5.00 | 5.00 | 5.00 | 5.00 | 5.00 | 5.00 | 5.00 | 5.00 |
| sulfur | 7.50 | 7.50 | 7.50 | 7.50 | 7.50 | 7.50 | 7.50 | 7.50 |
| | 812.5 | 812.5 | 812.5 | 812.5 | 812.5 | 812.5 | 812.5 | 812.5 |

Table 52

| Grade name | | | CB24 | NEODENE-45 | BR040 | LG-1208 | BR150L | BR360L | BR230 | CBR21.5 |
|---|---|---|---|---|---|---|---|---|---|---|
| Mooney viscosity | | $ML_{1+4}$, 100 | 43.4 | 44.0 | 44.6 | 47.0 | 42.2 | 48.5 | 34.5 | 39.0 |
| T-cp | | (cps) | 126.8 | 216.3 | 211.1 | 252.1 | 102 | 127.2 | 118.7 | N/A |
| T-cp/ML(1+4) | | | 2.9 | 4.9 | 4.7 | 5.4 | 2.4 | 2.6 | 3.4 | N/A |
| Cis1,4 | | | 96.5 | 97.6 | 96.5 | 98.0 | 98.4 | 98.6 | 98.3 | 98.6* |
| Vinyl 1,2 | | | 0.4 | 0.5 | 0.4 | 1.1 | 0.8 | 0.8 | 0.8 | 0.8* |
| Tran 1,2 | | | 3.1 | 1.9 | 3.1 | 0.9 | 0.8 | 0.6 | 0.9 | 0.6* |
| MWD | Mw | $(10^4)$ | 46.2 | 58.9 | 54.0 | 58.3 | 52.99 | 57.1 | 56.7 | 73.5* |
| | Mn | $(10^4)$ | 21.0 | 21.2 | 22.2 | 16.0 | 21.90 | 23.3 | 14.7 | 24.4* |
| | Mw/Mn | | 2.2 | 2.8 | 2.4 | 3.6 | 2.42 | 2.4 | 3.9 | 3.0* |
| * values are based on rubber portion only. | | | | | | | | | | |

5-13-2. Productive Mixing (Secondary Compound)

The sheets of the primary compounds obtained from the aforementioned non-productive mixing were then subject to the mixing with vulcanizing agent, most preferably sulfur, and the vulcanizing accelerators by using the standard roll at preferred temperature range of 60-70 °C within 3 minutes. The rubber compounds from the productive mixing (secondary compound) have been pulled in sheets and the samples were then subject to the measurements of Mooney viscosity (ML1+4,100 °C), curing time on a Moving Die Rheometer (MDR) at 160 °C.
The results are summarized in Table 53 below.

Table 53

| Product name | | | C 115 (Ref) | C 116 (Ref) | C 117 (Ref) | C 118 (Ref) | C 119 (Ref) | C 120 (Ref) | C 121 (Ref) | C 122 |
|---|---|---|---|---|---|---|---|---|---|---|
| Grade name | | | CB24 | NEODENE-45 | NeocisBR040 | LG-1208 | BR150L | BR360L | BR230 | CBR21.5 |
| Mooney viscosity; 2nd | | ML1+4,100°C | 79.8 | 80.7 | 77.5 | 79.3 | 77.1 | 81.8 | 73.0 | 71.7 |
| Curing rate | Min. T | (dN·m) | 3.2 | 3.3 | 3.1 | 3.2 | 3.2 | 3.2 | 3.0 | 3.1 |
| (150 °C) | Max. T | (dN·m) | 19.6 | 19.4 | 19.7 | 19.1 | 19.4 | 19.4 | 18.5 | 18.3 |
| | Ts1 | min. | 2.4 | 2.4 | 2.4 | 2.4 | 2.4 | 2.3 | 2.4 | 2.4 |
| | Tc(10) | min. | 3.1 | 3.1 | 3.1 | 3.1 | 3.1 | 3.0 | 3.1 | 3.1 |
| | Tc(90) | min. | 7.43 | 7.53 | 7.37 | 7.40 | 7.38 | 7.29 | 7.33 | 7.36 |

5-13-3. Vulcanization and Properties of the Filler-Filled Vulcanizates

The secondary filler-filled rubber compounds obtained from the productive mixing were processed in the mold pressing at 150 °C according the curing time observed by a MDR as already mentioned (t90x2). The rubber vulcanizates in various forms of the specimens were then subject to the measurements of the viscoelastic property during the temperature sweep, tensile strength, hardness, specific gravity, tear resistance, rebound resilience, abrasion resistance, and compression set.

The results are summarized in Table 54 below.

Table 54

| Product name | | | C 115 (Ref) | C 116 (Ref) | C 117 (Ref) | C 118 (Ref) | C 119 (Ref) | C 120 (Ref) | C 121 (Ref) | C 122 |
|---|---|---|---|---|---|---|---|---|---|---|
| Grade name | | | CB24 | NEODENE-45 | NeocisBR040 | LG-1208 | BR150L | BR360L | BR230 | CBR21.5 |
| Hardness | Type A | | 66-67 | 67 | 67 | 66-67 | 67 | 67 | 66 | 65 |
| Specific Gravity | | - | 1.108 | 1.108 | 1.108 | 1.109 | 1.108 | 1.108 | 1.108 | 1.109 |
| 100% Modulus | | kg/cm$^2$ | 29 | 28 | 29 | 28 | 30 | 30 | 28 | 28 |
| 200% Modulus | | kg/cm$^2$ | 76 | 73 | 74 | 71 | 77 | 78 | 73 | 72 |
| 300% Modulus | | kg/cm$^2$ | 138 | 137 | 137 | 132 | 141 | 142 | 136 | 133 |
| Tensile strength | | kg/cm$^2$ | 300 | 283 | 293 | 295 | 310 | 299 | 298 | 276 |
| Elongation | | % | 545 | 512 | 533 | 547 | 554 | 536 | 553 | 527 |
| (TBxEB)/2 | | | 81,750 | 72,448 | 78,041 | 80,683 | 85,870 | 80,132 | 82,397 | 72,726 |
| Tear resistance | | kg/cm | 87 | 82 | 81 | 85 | 84 | 83 | 83 | 82 |
| Rebound | BS | % | 58.5 | 58.5 | 58.5 | 56.8 | 58.5 | 60.1 | 56.8 | 60.1 |
| vs BR150L | | Index | 100 | 100 | 100 | 97 | 100 | 103 | 97 | 103 |
| Akron Abrasion | | cc loss | 0.044 | 0.043 | 0.053 | 0.043 | 0.044 | 0.041 | 0.045 | 0.053 |
| vs BR150L | | Index | 100 | 102 | 83 | 102 | 100 | 107 | 98 | 83 |
| Compression Set | | % | 29.0 | 27.2 | 29.9 | 28.6 | 27.7 | 25.6 | 27.9 | 25.8 |
| vs BR150L | | Index | 100 | 107 | 97 | 101 | 105 | 113 | 104 | 112 |
| Heat Build Up | | | | | | | | | | |
| DT | | (°C) | 22.0 | 22.2 | 22.0 | 23.0 | 22.2 | 21.7 | 23.3 | 20.8 |
| vs BR150L | | Index | 101 | 100 | 101 | 97 | 100 | 102 | 95 | 107 |
| PS | | (%) | 10.0 | 9.3 | 11.2 | 10.6 | 10.1 | 9.1 | 12.0 | 9.8 |
| vs BR150L | | Index | 101 | 109 | 90 | 95 | 100 | 111 | 84 | 103 |
| Viscoelasticity | | | | | | | | | | |
| -20°C | | | | | | | | | | |
| E' (MPa) | | | 24.3 | 22.3 | 24.7 | 22.6 | 24.8 | 24.0 | 22.1 | 25.5 |
| E" (MPa) | | | 5.9 | 5.4 | 6.0 | 5.6 | 6.0 | 6.0 | 5.5 | 6.4 |

| Viscoelasticity | | | | | | | | | | |
|---|---|---|---|---|---|---|---|---|---|---|
| -20°C | | | | | | | | | | |
| E* (MPa) | | | 25.0 | 23.0 | 25.5 | 23.3 | 25.5 | 24.8 | 22.8 | 26.3 |
| tand | | | 0.244 | 0.243 | 0.242 | 0.246 | 0.243 | 0.252 | 0.249 | 0.253 |
| Index (vs BR150L) | | | 100 | 100 | 99 | 101 | 100 | 103 | 102 | 104 |
| 0°C | | | | | | | | | | |
| E' (MPa) | | | 17.6 | 16.4 | 18.2 | 16.5 | 18.0 | 17.3 | 16.1 | 17.1 |
| E" (MPa) | | | 2.6 | 2.4 | 2.7 | 2.5 | 2.7 | 2.6 | 2.5 | 2.7 |
| E* (MPa) | | | 17.81 | 16.56 | 18.37 | 16.67 | 18.16 | 17.54 | 16.27 | 17.27 |
| tand | | | 0.148 | 0.146 | 0.149 | 0.151 | 0.151 | 0.151 | 0.152 | 0.160 |
| Index (vs BR 150L) | | | 98 | 97 | 99 | 100 | 100 | 100 | 101 | 106 |
| 60°C | | | | | | | | | | |
| E' (MPa) | | | 11.6 | 10.9 | 11.8 | 10.7 | 11.7 | 11.3 | 10.5 | 11.0 |
| E" (MPa) | | | 1.2 | 1.1 | 1.2 | 1.1 | 1.2 | 1.2 | 1.1 | 1.1 |
| E* (MPa) | | | 11.6 | 11.0 | 11.8 | 10.8 | 11.8 | 11.4 | 10.6 | 11.0 |
| tand | | | 0.101 | 0.097 | 0.103 | 0.102 | 0.103 | 0.102 | 0.104 | 0.102 |
| Index (vs BR 150L) | | | 103 | 107 | 101 | 102 | 100 | 102 | 99 | 101 |

EP 3 262 111 B1

As shown in Table 54, the physical properties are generally improved by using coconut oil extended BR compared to the case where other types of BRs are employed.

5-13-4. Processability

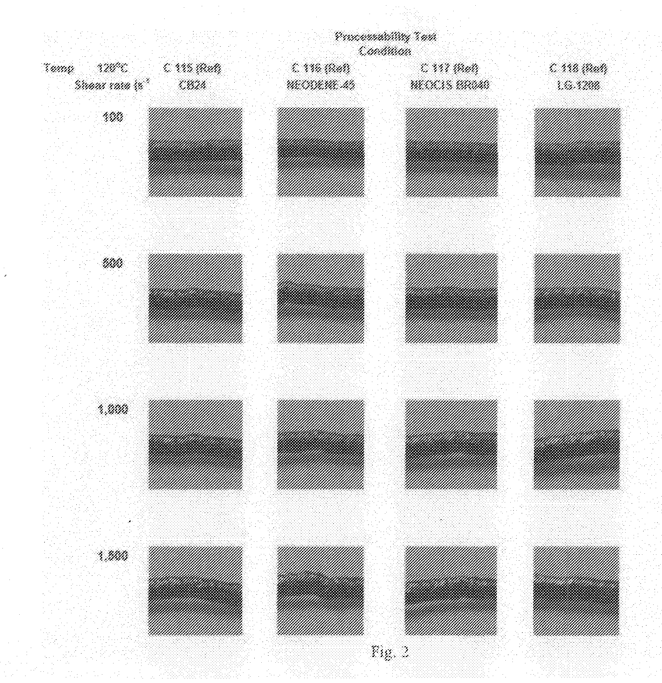

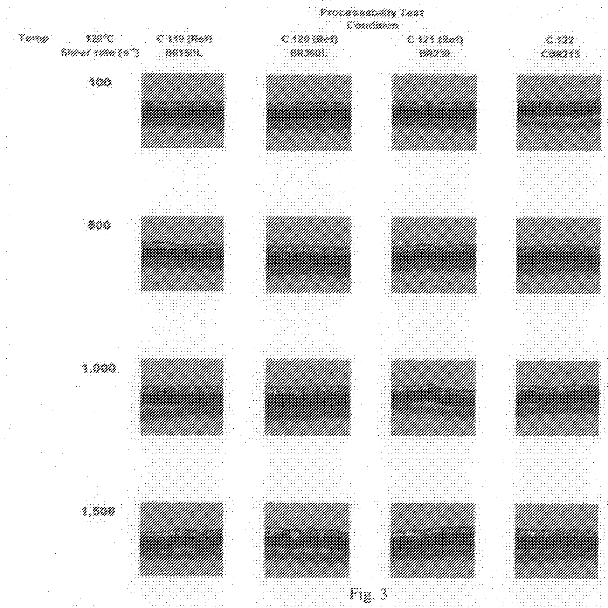

The processability is also studied by applying several rates of shears at the temperature of 120 °C. The results are summarized in Figures 2 and 3.
As is clear from Figures 2 and 3, the processability is also improved by using coconut oil extended BR.

5-14. The effect of coconut oil extended BR on Truck Bus tread hybrid formulation with silica and carbon black compound

5-14-1. Non-Productive Mixing (Primary Compound)

During the non-productive mixing, all components except the vulcanizing agent and accelerators were mixed in the standard mixer such as a banbury mixer with initial temperature at 90 °C within 5 minutes mixing time. Firstly, all of mixtures of diene polymers were mixed in banbury mixer for 30 seconds. Then, half of filler especially silica and silane coupling agent were added in to mixer. At 1 minute and 30 seconds of mixing process, all of fillers and other rubber compound ingredients were added into mixer. Then, ram of mixer chamber was opened up for cleaning residue filler. The mixing process had proceeded for 5 minutes. When mixing temperature reached 145 °C, the rotor speed of mixer had been reduced. The mixed compounds were rolled at preferred temperature range of 60-70 °C using the standard roller with nip clearance of 2 millimeter. The samples of the compound sheets were subject to the Mooney viscosity measurement.
The compositions are summarized is Tables 55 and 56 below, the former of which is described in phr and the latter of which is described in grams. The properties of various BRs are summarized in Table 52 above.

Table 55

| | C 123 (Ref) | C 124 (Ref) | C 125 (Ref) | C 126 (Ref) | C 127 (Ref) | C 128 (Ref) | C 129 (Ref) | C 130 | C 131 (Ref) | C 132 (Ref) |
|---|---|---|---|---|---|---|---|---|---|---|
| CB24 | 25 | | | | | | | | | |
| NEODENE-45 | | 25 | | | | | | | | |
| NeocisBR040 | | | 25 | | | | | | | |
| LG-1208 | | | | 25 | | | | | | |
| BR150L | | | | | 25 | | | | 25 | 40 |
| BR360L | | | | | | 25 | | | | |
| BR230 | | | | | | | 25 | | | |
| CBR21.5 | | | | | | | | 30.375 | | |
| NR STR20 (ML = 70) | 75 | 75 | 75 | 75 | 75 | 75 | 75 | 75 | 75 | 60 |
| SAF-C/B (N234) | 30 | 30 | 30 | 30 | 30 | 30 | 30 | 30 | 10 | 30 |
| Ultrasil 7000GR | 20 | 20 | 20 | 20 | 20 | 20 | 20 | 20 | 40 | 20 |
| Si69 | 1.6 | 1.6 | 1.6 | 1.6 | 1.6 | 1.6 | 1.6 | 1.6 | 3.2 | 1.6 |
| VIVATEC500 | 3 | 3 | 3 | 3 | 3 | 3 | 3 | 0 | 3 | 3 |
| ZnO | 3 | 3 | 3 | 3 | 3 | 3 | 3 | 3 | 3 | 3 |
| stearic acid | 2 | 2 | 2 | 2 | 2 | 2 | 2 | 2 | 2 | 2 |
| 6PPD | 2 | 2 | 2 | 2 | 2 | 2 | 2 | 2 | 2 | 2 |
| | 161.6 | 161.6 | 161.6 | 161.6 | 161.6 | 161.6 | 161.6 | 163.975 | 163.2 | 161.6 |

(continued)

| | C 123 (Ref) | C 124 (Ref) | C 125 (Ref) | C 126 (Ref) | C 127 (Ref) | C 128 (Ref) | C 129 (Ref) | C 130 | C 131 (Ref) | C 132 (Ref) |
|---|---|---|---|---|---|---|---|---|---|---|
| Compound | 161.6 | 161.6 | 161.6 | 161.6 | 161.6 | 161.6 | 161.6 | 163.975 | 163.2 | 161.6 |
| NS | 1.0 | 1.0 | 1.0 | 1.0 | 1.0 | 1.0 | 1.0 | 1.0 | 1.0 | 1.0 |
| sulfur | 1.5 | 1.5 | 1.5 | 1.5 | 1.5 | 1.5 | 1.5 | 1.5 | 1.5 | 1.5 |
| | 164.1 | 164.1 | 164.1 | 164.1 | 164.1 | 164.1 | 164.1 | 166.475 | 165.7 | 164.1 |

Table 56

| | C 123(Ref) | C 124 (Ref) | C 125 (Ref) | C 126 (Ref) | C 127 (Ref) | C 128 (Ref) | C 129 (Ref) | C 130 | C 131 (Ref) | C 132 (Ref) |
|---|---|---|---|---|---|---|---|---|---|---|
| CB24 | 187.5 | 0 | 0 | 0 | 0 | 0 | 0 | 0 | 0 | 0 |
| NEODENE-45 | 0 | 187.5 | 0 | 0 | 0 | 0 | 0 | 0 | 0 | 0 |
| NeocisBR040 | 0 | 0 | 187.5 | 0 | 0 | 0 | 0 | 0 | 0 | 0 |
| LG-1208 | 0 | 0 | 0 | 187.5 | 0 | 0 | 0 | 0 | 0 | 0 |
| BR150L | 0 | 0 | 0 | 0 | 187.5 | 0 | 0 | 0 | 187.5 | 300 |
| BR360L | 0 | 0 | 0 | 0 | 0 | 187.5 | 0 | 0 | 0 | 0 |
| BR230 | 0 | 0 | 0 | 0 | 0 | 0 | 187.5 | 0 | 0 | 0 |
| CBR21.5 | 0 | 0 | 0 | 0 | 0 | 0 | 0 | 227.813 | 0 | 0 |
| NR STR20 (ML = 70) | 562.5 | 562.5 | 562.5 | 562.5 | 562.5 | 562.5 | 562.5 | 562.5 | 562.5 | 450 |
| SAF-C/B (N234) | 225 | 225 | 225 | 225 | 225 | 225 | 225 | 225 | 75 | 225 |
| Ultrasil 7000GR | 150 | 150 | 150 | 150 | 150 | 150 | 150 | 150 | 300 | 150 |
| Si69 | 12 | 12 | 12 | 12 | 12 | 12 | 12 | 12 | 24 | 12 |
| VIVATEC500 | 22.5 | 22.5 | 22.5 | 22.5 | 22.5 | 22.5 | 22.5 | 0 | 22.5 | 22.5 |
| ZnO | 22.5 | 22.5 | 22.5 | 22.5 | 22.5 | 22.5 | 22.5 | 22.5 | 22.5 | 22.5 |
| stearic acid | 15 | 15 | 15 | 15 | 15 | 15 | 15 | 15 | 15 | 15 |
| 6PPD | 15 | 15 | 15 | 15 | 15 | 15 | 15 | 15 | 15 | 15 |
| | 1212 | 1212 | 1212 | 1212 | 1212 | 1212 | 1212 | 1229.81 | 1224 | 1212 |
| Compound | 1050.4 | 1050.4 | 1050.4 | 1050.4 | 1050.4 | 1050.4 | 1050.4 | 1065.8 | 1060.8 | 1050.4 |
| NS (TBBS) | 6.5 | 6.5 | 6.5 | 6.5 | 6.5 | 6.5 | 6.5 | 6.5 | 6.5 | 6.5 |
| sulfur | 9.8 | 9.8 | 9.8 | 9.8 | 9.8 | 9.8 | 9.8 | 9.8 | 9.8 | 9.8 |
| | 1066.65 | 1066.7 | 1066.65 | 1066.65 | 1066.65 | 1066.65 | 1066.65 | 1082.09 | 1077.1 | 1066.7 |

5-14-2. Productive Mixing (Secondary Compound)

The sheets of the primary compounds obtained from the aforementioned non-productive mixing were then subject to the mixing with vulcanizing agent, most preferably sulfur, and the vulcanizing accelerators by using the standard roll at preferred temperature range of 60-70 °C within 4 minutes. The rubber compounds from the productive mixing (secondary compound) have been pulled in sheets and the samples were then subject to the measurements of Mooney viscosity (ML1+4,100 °C), curing time on a Moving Die Rheometer (MDR) at 160 °C.

The results are summarized in Table 57 below.

Table 57

| Product name | | C 123 (Ref) | C 124 (Ref) | C 125 (Ref) | C 126 (Ref) | C 127 (Ref) | C 128 (Ref) | C 129 (Ref) | C 130 | C 131 (Ref) | C 132 (Ref) |
|---|---|---|---|---|---|---|---|---|---|---|---|
| Grade name | | CB24 | NEODENE-45 | NeocisBR040 | LG-1208 | BR150L | BR360L | BR230 | CBR21.5 | 150L/25 | 150L/40 |
| Mooney viscosity; 2nd | ML1+4, 100°C | 69.0 | 69.6 | 69.1 | 67.6 | 67.8 | 69.7 | 63.7 | 65.0 | 66.0 | 73.7 |
| Curing rate (150 °C) | Min. T (dN · m) | 2.6 | 2.6 | 2.6 | 2.7 | 2.7 | 2.8 | 2.6 | 2.5 | 2.6 | 2.9 |
| | Max. T (dN · m) | 15.7 | 15.6 | 16.0 | 16.17 | 16.0 | 16.4 | 15.3 | 15.1 | 13.7 | 17.0 |
| | Ts1 min. | 2.5 | 2.5 | 2.5 | 2.4 | 2.4 | 2.4 | 2.4 | 2.5 | 3.4 | 2.5 |
| | Tc (10) min. | 3.1 | 3.1 | 3.1 | 2.6 | 3.0 | 3.0 | 3.0 | 3.1 | 3.5 | 3.1 |
| | Tc (90) min. | 9.28 | 9.28 | 9.40 | 9.22 | 9.18 | 9.17 | 9.30 | 9.48 | 18.01 | 10.15 |

5-14-3. Vulcanization and Properties of the Filler-Filled Vulcanizates

The secondary filler-filled rubber compounds obtained from the productive mixing were processed in the mold pressing at 150 °C according the curing time observed by a MDR as already mentioned (t90x2). The rubber vulcanizates in various forms of the specimens were then subject to the measurements of the viscoelastic property during the temperature sweep, tensile strength, hardness, specific gravity, tear resistance, rebound resilience, abrasion resistance, and compression set.

The results are summarized in Table 58 below.

Table 58

| Product name | | | C 123 (Ref) | C 124 (Ref) | C 125 (Ref) | C 126 (Ref) | C 127 (Ref) | C 128 (Ref) | C 129 (Ref) | C 130 | C 131 (Ref) | C 132 (Ref) |
|---|---|---|---|---|---|---|---|---|---|---|---|---|
| Grade name | | | CB24 | NEODENE-45 | NeocisBR040 | LG-1208 | BR150L | BR360L | BR230 | CBR21.5 | 150L/25 | 150L/40 |
| Hardness | Type A | | 64 | 64 | 65 | 64 | 64 | 64 | 65 | 64 | 61 | 66 |
| Specific Gravity | | - | 1.119 | 1.121 | 1.120 | 1.120 | 1.121 | 1.121 | 1.119 | 1.114 | 1.130 | 1.120 |
| 100% Modulus | | kg/cm$^2$ | 21 | 21 | 21 | 22 | 21 | 21 | 21 | 21 | 15 | 21 |
| 200% Modulus | | kg/cm$^2$ | 50 | 51 | 51 | 51 | 50 | 51 | 50 | 49 | 33 | 48 |
| 300% Modulus | | kg/cm$^2$ | 95 | 97 | 96 | 95 | 94 | 96 | 93 | 93 | 61 | 90 |
| Tensile strength | | kg/cm$^2$ | 284 | 280 | 292 | 273 | 277 | 269 | 279 | 272 | 232 | 271 |
| Elonaation | | % | 624 | 623 | 639 | 615 | 634 | 591 | 628 | 615 | 673 | 631 |
| Breakina Enerav | | (TBxEB)/2 | 88,608 | 87,220 | 93,294 | 83,948 | 87,809 | 79,490 | 87,606 | 83,640 | 78,068 | 85,501 |
| Tear resistance | | kg/cm | 73 | 68 | 69 | 71 | 67 | 68 | 69 | 66 | 59 | 71 |
| Rebound | BS | % | 58.5 | 58.5 | 56.8 | 56.8 | 57.8 | 58.5 | 55.2 | 60.1 | 56.8 | 58.5 |
| vs BR150L | | Index | 101 | 101 | 98 | 98 | 100 | 101 | 95 | 104 | 98 | 101 |
| Akron Abrasion | | cc loss | 0.075 | 0.073 | 0.074 | 0.073 | 0.075 | 0.074 | 0.080 | 0.070 | 0.123 | 0.069 |
| vs BR150L | | Index | 100 | 103 | 101 | 103 | 100 | 101 | 94 | 107 | 61 | 109 |
| Lambourn abrasion | | | | | | | | | | | | |
| 20% slip rate | | cc loss (g) | 0.1004 | 0.0966 | 0.0920 | 0.0956 | 0.0934 | 0.0920 | 0.0958 | 0.0747 | 0.0853 | 0.0805 |
| vs BR150L | | Index | 93 | 97 | 102 | 98 | 100 | 94 | 97 | 125 | 110 | 116 |
| 40% slip rate | | cc loss (g) | 0.0887 | 0.0880 | 0.0895 | 0.0933 | 0.0922 | 0.0876 | 0.0905 | 0.0766 | 0.0920 | 0.0621 |
| vs BR150L | | Index | 104 | 105 | 103 | 99 | 100 | 105 | 102 | 120 | 100 | 149 |

| Product name | | | C 123 (Ref) | C 124 (Ref) | C 125 (Ref) | C 126 (Ref) | C 127 (Ref) | C 128 (Ref) | C 129 (Ref) | C 130 | C 131 (Ref) | C 132 (Ref) |
|---|---|---|---|---|---|---|---|---|---|---|---|---|
| Grade name | | | CB24 | NEODENE-45 | NeocisBR040 | LG-1208 | BR150L | BR360L | BR230 | CBR21.5 | 150L/25 | 150L/40 |
| Compression Set | | % | 22.6 | 22.9 | 22.7 | 23.4 | 23.4 | 24.7 | 25.7 | 24.5 | 26.5 | 23.6 |
| vs BR150L | | Index | 103.5 | 102.2 | 103.1 | 100.0 | 100.0 | 94.7 | 91.1 | 95.5 | 88.3 | 99.2 |
| Heat Build Up | | | | | | | | | | | | |
| D T | | (°C) | 25.0 | 25.8 | 25.4 | 29.8 | 26.3 | 26.5 | 27.6 | 22.8 | 43.3 | 29.8 |
| vs BR150L | | Index | 105 | 102 | 104 | 88 | 100 | 99 | 95 | 115 | 61 | 88 |
| PS | | (%) | 13.0 | 12.3 | 12.0 | 14.3 | 12.6 | 12.5 | 14.3 | 10.5 | 34.8 | 13.6 |
| vs BR150L | | Index | 97 | 103 | 105 | 88 | 100 | 101 | 88 | 120 | 36 | 93 |
| Viscoelasticity | | | | | | | | | | | | |
| -20°C | | | | | | | | | | | | |
| E' (MPa) | | | 15.6 | 15.4 | 15.3 | 16.4 | 16.8 | 16.0 | 16.7 | 17.5 | 12.5 | 14.6 |
| E" (MPa) | | | 4.2 | 4.0 | 4.0 | 4.3 | 4.4 | 4.2 | 4.3 | 4.3 | 3.3 | 3.5 |
| E* (MPa) | | | 16.1 | 15.9 | 15.8 | 16.9 | 17.3 | 16.5 | 17.2 | 18.0 | 13.0 | 15.0 |
| tand | | | 0.270 | 0.260 | 0.261 | 0.261 | 0.263 | 0.261 | 0.257 | 0.249 | 0.265 | 0.237 |
| Index (vs BR150L) | | | 103 | 99 | 99 | 99 | 100 | 99 | 98 | 94 | 101 | 90 |
| 0°C | | | | | | | | | | | | |
| E* (MPa) | | | 11.1 | 11.0 | 11.0 | 11.6 | 12.0 | 11.4 | 11.9 | 11.3 | 8.7 | 10.6 |
| E" (MPa) | | | 1.7 | 1.6 | 1.7 | 1.8 | 1.8 | 1.7 | 1.8 | 1.7 | 1.3 | 1.6 |
| E* (MPa) | | | 11.18 | 11.14 | 11.12 | 11.78 | 12.12 | 11.52 | 11.99 | 11.39 | 8.79 | 10.75 |
| tand | | | 0.151 | 0.149 | 0.151 | 0.152 | 0.152 | 0.150 | 0.155 | 0.152 | 0.147 | 0.148 |
| Index (vs BR150L) | | | 99 | 98 | 99 | 100 | 100 | 99 | 102 | 100 | 97 | 97 |
| 60°C | | | | | | | | | | | | |
| E* (MPa) | | | 7.2 | 7.2 | 7.1 | 7.7 | 7.6 | 7.4 | 7.7 | 7.1 | 5.7 | 7.5 |

EP 3 262 111 B1

| 60°C | | | | | | | | | | | | |
|---|---|---|---|---|---|---|---|---|---|---|---|---|
| E" (MPa) | | | 0.7 | 0.7 | 0.7 | 0.8 | 0.8 | 0.7 | 0.8 | 0.7 | 0.6 | 0.8 |
| E* (MPa) | | | 7.2 | 7.2 | 7.2 | 7.8 | 7.7 | 7.4 | 7.7 | 7.1 | 5.8 | 7.5 |
| tand | | | 0.100 | 0.099 | 0.100 | 0.101 | 0.102 | 0.099 | 0.106 | 0.095 | 0.111 | 0.104 |
| Index (vs BR1 50L) | | 101 | 103 | 102 | 101 | 100 | 103 | 96 | 108 | 92 | 98 |

As shown in Table 58, the physical properties are generally improved by using coconut oil extended BR compared to the case where other types of BRs are employed.

5-14-4. Processability

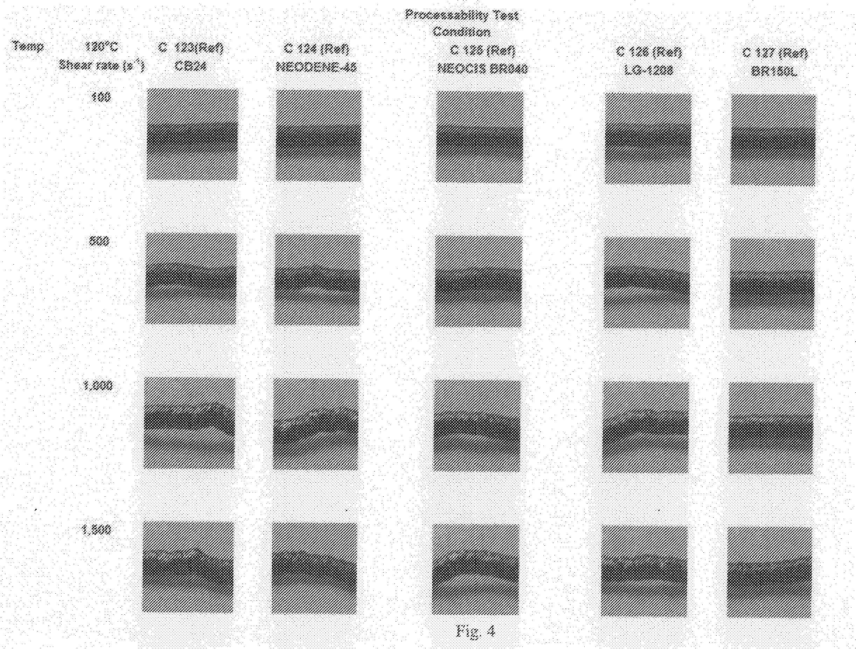

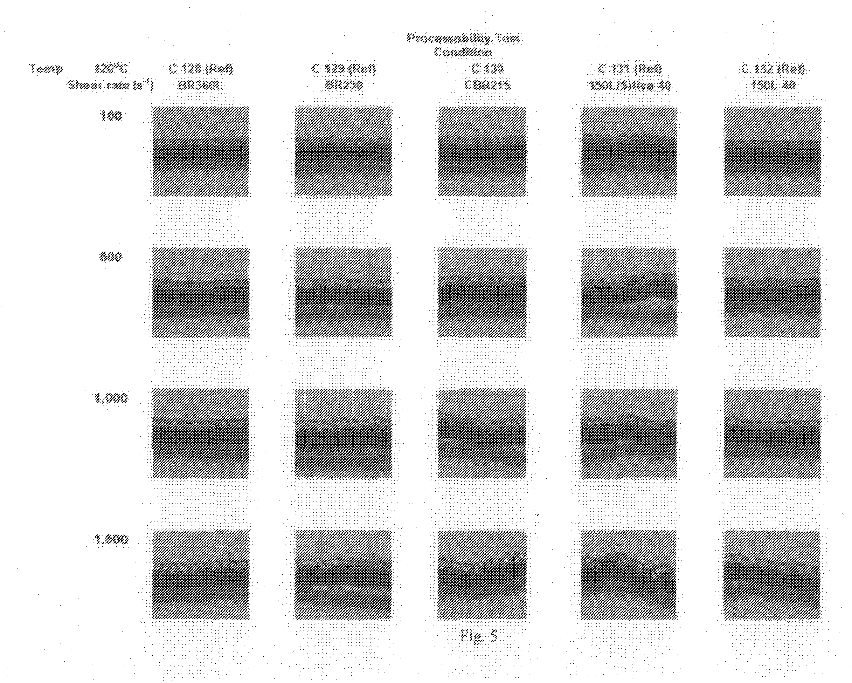

The processability is also studied by the same way as described in section 5-13-4 and the results are summarized in Figures 4 and 5.
As is clear from Figures 4 and 5, the processability is also improved by using coconut oil extended BR.

Best Mode for Carrying out the Invention

As we mentioned on the Invention disclosure section.

Industrial Applicability

The purpose of this invention is to provide an oil-extended rubber which has improved physical properties and a rubber composition containing the oil-extended rubber, which can be applied to rubber industry or tires industry or shoe sole industry containing the rubber composition.

**Claims**

1. An oil-extended rubber comprising:

   a vulcanizable rubber component; and
   a coconut oil with a free fatty acid content in a range of 5 to 18% by mass as measured by the test method according to AOAC (2012) 940.28,
   wherein the content of the coconut oil is ranging from 21.5 to 37.5 part per hundred rubber (phr).

2. The oil-extended rubber according to claim 1, wherein an iodine value of the coconut oil is 10 or more.

3. The oil-extended rubber according to claim 1, wherein the vulcanizable rubber component is a polybutadiene.

4. The oil-extended rubber according to claim 1, wherein the vulcanizable rubber component is a 1,4-cis-polybutadiene.

5. A rubber composition comprising the oil-extended rubber according to any of the claims 1 to 4, and further comprising:

   a diene-based rubber other than the vulcanizable rubber; and
   a rubber reinforcing agent.

6. The rubber composition according to claim 5, further comprising a rubber process oil.

7. The rubber composition according to claim 5, further comprising a coconut oil.

8. The rubber composition according to any of claims 5 to 7, wherein the rubber reinforcing agent comprises silica.

9. A rubber composition comprising a vulcanizable rubber component, a coconut oil with a free fatty acid content in a range of 5 to 18% by mass as measured by the test method according to AOAC (2012) 940.28, a diene-based rubber other than the vulcanizable rubber, and a rubber reinforcing agent, wherein the content of the coconut oil is ranging from 21.5 to 37.5 part per hundred rubber (phr).

10. A tire comprising the rubber composition according to any one of the claims 5 to 9.

11. A shoe sole comprising the rubber composition according to any one of the claims 5 to 9.

12. A method for manufacturing an oil-extended rubber, the method comprising a step of:

   mixing a vulcanizable rubber component and a coconut oil with a free fatty acid content in a range of 5 to 18% by mass as measured by the test method according to AOAC (2012) 940.28,
wherein the content of the coconut oil is adjusted to be in the range 21.5 to 37.5 part per hundred rubber (phr).

13. The method according to claim 12, wherein the mixing step is performed without adding solvents.

14. The method according to claim 12, further comprising a step of:

dissolving the vulcanizable rubber component in a solvent prior to performing the mixing step; and
using the dissolved vulcanizable rubber component in the mixing step.


**Patentansprüche**

1. Ölgestreckter Kautschuk, umfassend:

eine vulkanisierbare Kautschukkomponente; und
ein Kokosöl mit einem Gehalt an freien Fettsäuren in einem Bereich von 5 bis 18 Masse-%, gemessen gemäß dem Prüfverfahren nach AOAC (2012) 940.28,
wobei der Gehalt des Kokosöls von 21,5 bis 37,5 part per hundred rubber (phr) reicht.

2. Ölgestreckter Kautschuk nach Anspruch 1, wobei eine Iodzahl des Kokosöls 10 oder mehr beträgt.

3. Ölgestreckter Kautschuk nach Anspruch 1, wobei die vulkanisierbare Kautschukkomponente ein Polybutadien ist.

4. Ölgestreckter Kautschuk nach Anspruch 1, wobei die vulkanisierbare Kautschukkomponente ein 1,4-cis-Polybutadien ist.

5. Kautschukzusammensetzung, die den ölgestreckten Kautschuk nach einem der Ansprüche 1 bis 4 umfasst, und die des Weiteren umfasst:

einen Dienkautschuk außer dem vulkanisierbaren Kautschuk; und
ein Kautschukverstärkungsmittel.

6. Kautschukzusammensetzung nach Anspruch 5, die des Weiteren ein Kautschukprozessöl umfasst.

7. Kautschukzusammensetzung nach Anspruch 5, die des Weiteren ein Kokosöl umfasst.

8. Kautschukzusammensetzung nach einem der Ansprüche 5 bis 7, wobei das Kautschukverstärkungsmittel Siliciumdioxid umfasst.

9. Kautschukzusammensetzung, die eine vulkanisierbare Kautschukkomponente, ein Kokosöl mit einem Gehalt an freien Fettsäuren in einem Bereich von 5 bis 18 Masse-%, gemessen gemäß dem Prüfverfahren nach AOAC (2012) 940.28, einen Dienkautschuk außer dem vulkanisierbaren Kautschuk und ein Kautschukverstärkungsmittel umfasst, wobei der Gehalt des Kokosöls von 21,5 bis 37,5 part per hundred rubber (phr) reicht.

10. Reifen, der die Kautschukzusammensetzung nach einem der Ansprüche 5 bis 9 umfasst.

11. Schuhsohle, die die Kautschukzusammensetzung nach einem der Ansprüche 5 bis 9 umfasst.

12. Verfahren zur Herstellung eines ölgestreckten Kautschuks, wobei das Verfahren den Schritt umfasst:

Mischen einer vulkanisierbaren Kautschukkomponente und eines Kokosöls mit einem Gehalt an freien Fettsäuren in einem Bereich von 5 bis 18 Masse-%, gemessen gemäß dem Prüfverfahren nach AOAC (2012) 940.28, wobei der Gehalt des Kokosöls so eingestellt wird, dass er im Bereich von 21,5 bis 37,5 part per hundred rubber (phr) liegt.

13. Verfahren nach Anspruch 12, wobei der Mischschritt ohne die Zugabe von Lösungsmitteln durchgeführt wird.

**14.** Verfahren nach Anspruch 12, das des Weiteren den Schritt umfasst:

Lösen der vulkanisierbaren Kautschukkomponente in einem Lösungsmittel vor der Durchführung des Mischschritts; und
Verwenden der gelösten vulkanisierbaren Kautschukkomponente im Mischschritt.

**Revendications**

**1.** Caoutchouc étendu à l'huile comprenant :

un composant de caoutchouc vulcanisable ; et
une huile de coco ayant une teneur en acide gras libre comprise dans une plage de 5 à 18 % en masse comme mesurée par la méthode de test selon AOAC (2012) 940.28,
dans lequel la teneur en huile de coco est comprise dans la plage allant de 21,5 à 37,5 parties pour cent de caoutchouc (phr).

**2.** Caoutchouc étendu à l'huile selon la revendication 1, dans lequel un indice d'iode de l'huile de coco est supérieur ou égal à 10.

**3.** Caoutchouc étendu à l'huile selon la revendication 1, dans lequel le composant de caoutchouc vulcanisable est un polybutadiène.

**4.** Caoutchouc étendu à l'huile selon la revendication 1, dans lequel le composant de caoutchouc vulcanisable est un 1,4-cis-polybutadiène.

**5.** Composition de caoutchouc comprenant le caoutchouc étendu à l'huile selon l'une quelconque des revendications 1 à 4, et comprenant en outre :

un caoutchouc à base de diène autre que le caoutchouc vulcanisable ; et
un agent de renforcement de caoutchouc.

**6.** Composition de caoutchouc selon la revendication 5, comprenant en outre une huile de traitement de caoutchouc.

**7.** Composition de caoutchouc selon la revendication 5, comprenant en outre une huile de coco.

**8.** Composition de caoutchouc selon l'une quelconque des revendications 5 à 7, dans laquelle l'agent de renforcement de caoutchouc comprend de la silice.

**9.** Composition de caoutchouc comprenant un composant de caoutchouc vulcanisable, une huile de coco ayant une teneur en acide gras libre comprise dans une plage de 5 à 18 % en masse comme mesurée par la méthode de test selon AOAC (2012) 940.28, un caoutchouc à base de diène autre que le caoutchouc vulcanisable, et un agent de renforcement de caoutchouc,
dans laquelle la teneur en huile de coco est comprise dans la plage allant de 21,5 à 37,5 parties pour cent de caoutchouc (phr).

**10.** Pneu comprenant la composition de caoutchouc selon l'une quelconque des revendications 5 à 9.

**11.** Semelle de chaussure comprenant la composition de caoutchouc selon l'une quelconque des revendications 5 à 9.

**12.** Procédé de fabrication d'un caoutchouc étendu à l'huile, le procédé comprenant une étape de :

mélange d'un composant de caoutchouc vulcanisable et d'une huile de coco ayant une teneur en acide gras libre comprise dans une plage de 5 à 18 % en masse comme mesurée par la méthode de test selon AOAC (2012) 940.28,
dans lequel la teneur en huile de coco est ajustée pour être comprise dans la plage allant de 21,5 à 37,5 parties pour cent de caoutchouc (phr).

**13.** Procédé selon la revendication 12, dans lequel l'étape de mélange est mise en œuvre sans ajout de solvants.

**14.** Procédé selon la revendication 12, comprenant en outre une étape de :

dissolution du composant de caoutchouc vulcanisable dans un solvant avant la mise en œuvre de l'étape de mélange ; et
utilisation du composant de caoutchouc vulcanisable dans l'étape de mélange.

Fig. 1

Processability Test
Condition

| Temp 120°C | C 115 (Ref) | C 116 (Ref) | C 117 (Ref) | C 118 (Ref) |
|---|---|---|---|---|
| Shear rate (s⁻¹) | CB24 | NEODENE 45 | NEOCIS BR040 | LG 1208 |

Fig. 2

Fig. 3

Processability Test
Condition

| Temp | 130°C | C 123(Ref) | C 124 (Ref) | C 135 (Ref) | C 126 (Ref) | C 127 (Ref) |
| --- | --- | --- | --- | --- | --- | --- |
| | Shear rate (s⁻¹) | CB24 | NEODENE-45 | NEOCIS BR040 | LG-1208 | BR150L |

100

500

1,000

1,500

Fig. 4

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090176910 A
- JP 4335557 B
- WO 2008044722 A
- KR 2011073060
- US 20120065324 A
- US 20080097023 A
- US 20110112215 A
- EP 2072280 A